# EUROPEAN PATENT APPLICATION

(11) **EP 4 286 326 A1**
(43) Date of publication of application: **06.12.2023**
(21) Application number: 22746055.7
(22) Date of filing: 28.01.2022
(51) Int. Cl.: C01B 32/05, B01D 53/62, B01J 19/00, B22F 1/00, B22F 1/052, B82Y 40/00, C01B 32/15, C01G 49/08, C21B 3/04

(54) **METHOD FOR PRODUCING CARBON MATERIAL, CARBON MATERIAL, METHOD FOR DECOMPOSING CARBON DIOXIDE, AND REDUCING AGENT**

(30) Priority: 28.01.2021 JP 2021012445; 28.01.2021 JP 2021012447; 27.01.2022 JP 2022011185; 27.01.2022 JP 2022011195
(71) Applicant: Mitsubishi Materials Corporation, Tokyo 100-8117 (JP)
(72) Inventor: DAI, Wenbin, Tokyo 100-8117 (JP); HORIUCHI, Nobutake, Naka-shi, Ibaraki 311-0102 (JP); INADA, Kazuhisa, Naka-shi, Ibaraki 311-0102 (JP); FUKUDA, Tatsuya, Saitama-shi, Saitama 330-8508 (JP); ITOU, Miki, Naka-shi, Ibaraki 311-0102 (JP); TANEICHI, Yayoi, Naka-shi, Ibaraki 311-0102 (JP); SAKAMOTO, Yuko, Naka-shi, Ibaraki 311-0102 (JP)
(74) Representative: Gille Hrabal Partnerschaftsgesellschaft mbB Patentanwälte
(86) International application number: PCT/JP2022/003437
(87) International publication number: WO 2022/163836

(57) **Abstract**

There is provided a method for producing a carbon material, including a carbon generation step of causing carbon dioxide to react with a reducing agent to generate carbon, in which, as the reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.

## Description

### [Technical Field]

The present invention relates to a method for producing a carbon material, in which carbon dioxide is reduced to produce carbon, a carbon material, a method for decomposing carbon dioxide, and a reducing agent.

Priority is claimed on Japanese Patent Application No. 2021-012445 and Japanese Patent Application No. 2021-012447, filed January 28, 2021, and Japanese Patent Application No. 2022-011185 and Japanese Patent Application No. 2022-011195, filed January 27, 2022, the contents of which are incorporated herein by reference.

### [Background Art]

A large amount of carbon dioxide (CO₂) is emitted from, for example, steel plants, thermal power plants, cement manufacturing plants, garbage incineration facilities, and the like. Therefore, from the viewpoint of preventing global warming, it is important to recover carbon dioxide without releasing it into the atmospheric air.

In the related art, as techniques for separating and recovering carbon dioxide, a chemical absorption method, a physical absorption method, a membrane separation method, and the like are known. In addition, as techniques for decomposing the recovered carbon dioxide, a semiconductor photocatalyst method, a photochemical reduction method using a metal colloid catalyst and a metal complex catalyst, or the like, an electrochemical reduction method, and a decomposition method using a chemical fixation conversion reaction, for example, a reaction with a base, a transfer reaction, a dehydration reaction, or an addition reaction are known. However, none of these methods for decomposing carbon dioxide is practical in terms of reaction efficiency, cost, and energy consumption.

For this reason, for example, Patent Document 1 discloses a method in which carbon dioxide is reduced to generate carbon by using magnetite having a vacancy that is an oxygen-deficient site in the lattice, that is, an oxygen-deficient iron oxide, and methane or methanol is obtained from the carbon. In the invention of Patent Document 1, it is said that carbon dioxide is decomposed (undergoes a reduction reaction) by the oxygen-deficient iron oxide, and an iron oxide generated by oxidation is reduced with hydrogen to return to the oxygen-deficient iron oxide again, whereby a closed system capable of continuously decomposing carbon dioxide efficiently can be realized.

### [Citation List]

### [Patent Document]

### [Patent Document 1]

Japanese Unexamined Patent Application, First Publication No. H5-184912(A)

### [Summary of Invention]

### [Technical Problem]

However, under the reaction conditions disclosed in Patent Document 1, there is a problem that the oxygen deficiency of the oxygen-deficient iron oxide is small (in a case where the oxygen-deficient iron oxide is represented by Fe₃O_{4-δ}, δ is 0.16 at maximum), the ability to decompose carbon dioxide is low, and thus carbon dioxide cannot be subjected to an efficient decomposition treatment.

The present invention has been made in consideration of the above-described circumstances, and an object of the present invention is to provide a method for producing a carbon material, which makes it possible to efficiently produce a carbon material by using a reducing agent having a high reducing ability to decompose carbon dioxide with a high reaction efficiency, and provide a carbon material obtained by this method, a method for decomposing carbon dioxide, and a reducing agent.

In addition, an object of the present invention is to provide a method for producing a carbon material by effectively using an exhaust gas (carbon dioxide or by-product hydrogen) or waste heat which is generated in a steel plant, where the method makes it possible to effectively produce a carbon material by using a reducing agent having a high reducing ability to decompose carbon dioxide with a high reaction efficiency, and provide a carbon material obtained by this method and a method for decomposing carbon dioxide.

### [Solution to Problem]

Aspects of the present invention are shown below.
(1) A method for producing a carbon material according to one aspect of the present invention (hereinafter referred to as "the method for producing a carbon material according to the present invention") is a method for producing a carbon material, having a carbon generation step of causing carbon dioxide to react with a reducing agent to generate carbon, in which, as the reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.
(2) The method for producing a carbon material according to the present invention may further have a reducing agent generation step of causing a magnetite to be reduced and hydrogen to react with each other to carry out a deoxygenation reaction of the magnetite to generate the oxygen-deficient iron oxide or the oxygen-completely deficient iron.
(3) In the method for producing a carbon material according to the present invention, in the reducing agent generation step, a reaction temperature may be set in a range of 300°C or higher and 450°C or lower.
(4) In the method for producing a carbon material according to the present invention, a concentration of the hydrogen that is used in the reducing agent generation step may be in a range of 5% by volume or more and 100% by volume or less.
(5) The method for producing a carbon material according to the present invention may further have a carbon capture step a of dissolving the reducing agent which has been oxidized and separating the carbon, after the carbon generation step.
(6) In the method for producing a carbon material according to the present invention, the carbon may be nano-sized carbon having a particle diameter of 1 µm or less.
(7) In the method for producing a carbon material according to the present invention, in the carbon generation step, a reaction temperature may be set in a range of 300°C or higher and 450°C or lower.
(8) In the method for producing a carbon material according to the present invention, in the carbon generation step, a reaction pressure may be set in a range of 0.01 MPa or more and 5 MPa or less.
(9) In the method for producing a carbon material according to the present invention, in the carbon generation step, the carbon and magnetite to be generated are generated, in the reducing agent generation step, the magnetite to be generated is used as the magnetite to be reduced, and an exhaust gas generated in a steel plant may be used in at least a part of at least any one of the carbon dioxide or the hydrogen.
(9B) A method for producing a carbon material according to another aspect of the present invention is a method for producing a carbon material, having a carbon generation step of causing carbon dioxide to react with a reducing agent to generate carbon and magnetite and a reducing agent generation step of reacting the magnetite and hydrogen to generate the reducing agent, in which an exhaust gas generated in a steel plant is used in at least a part of at least any one of the carbon dioxide or the hydrogen, and as reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.
(10) In the method for producing a carbon material according to the present invention, in the reducing agent generation step, a reaction temperature is in a range of 300°C or higher and 450°C or lower, and heating may be carried out using waste heat generated in the steel plant.
(11) In the method for producing a carbon material according to the present invention, a concentration of the hydrogen that is used in the reducing agent generation step may be in a range of 5% by volume or more and 100% by volume or less.
(12) In the method for producing a carbon material according to the present invention, in the carbon generation step, a reaction temperature is in a range of 300°C or higher and 450°C or lower, and heating may be carried out using waste heat generated in the steel plant.
(13) In the method for producing a carbon material according to the present invention, in the carbon generation step, a reaction pressure may be in a range of 0.01 MPa or more and 5 MPa or less.
(14) In the method for producing a carbon material according to the present invention, the carbon may be nano-sized carbon having a particle diameter of 1 µm or less.
(15) Iron sand contained in iron ore that is used in the steel plant may be used in at least a part of the magnetite.
(16) The method for producing a carbon material according to the present invention may further have a step of supplying at least a part of the reducing agent oxidized through the carbon generation step to the steel plant as a raw material for steelmaking, which is consumed in the steel plant.
(17) The method for producing a carbon material according to the present invention may further have a step of supplying at least a part of the carbon generated in the carbon generation step to the steel plant as a substitute for coke, which is consumed in the steel plant.
(18) The method for producing a carbon material according to the present invention may further have a carbon capture step dissolving the reducing agent which has been oxidized and separating the carbon, after the carbon generation step.
(19) In the method for producing a carbon material according to the present invention, the magnetite to be reduced may have a specific surface area in a range of 0.1 m²/g or more and 10 m²/g or less according to a BET method.
(20) In the method for producing a carbon material according to the present invention, the magnetite to be reduced may have an average particle diameter in a range of 1 µm or more and 1,000 µm or less.
(21) In the method for producing a carbon material according to the present invention, the magnetite to be reduced may have a bulk density in a range of 0.3 g/cm³ or more and 3 g/cm³ or less.
(22) A carbon material according to another aspect according to the present invention (hereinafter, referred to as "the carbon material according to the present invention") is a carbon material produced by the method for producing a carbon material according to the present invention.
(23) A method for decomposing carbon dioxide according to another aspect of the present invention (hereinafter, referred to as "the method for decomposing carbon dioxide according to the present invention") is a method for decomposing carbon dioxide, having a carbon dioxide decomposition step of reacting carbon dioxide and a reducing agent to decompose the carbon dioxide, in which, as the reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.
(24) In the method for decomposing carbon dioxide according to the present invention, an exhaust gas generated in a steel plant may be used as the carbon dioxide.
(25) A reducing agent according to another aspect of the present invention (hereinafter, referred to as a "reducing agent according to the present invention") is a reducing agent that includes at least one of an oxygen-deficient iron oxide represented by Fe₃O_{4-δ} (where δ is 1 or more and less than 4), which is obtained by reducing magnetite while maintaining a crystal structure, and an oxygen-completely deficient iron (δ = 4) which is obtained by completely reducing magnetite.
(26) The reducing agent according to the present invention may be a reducing agent that is obtained by reacting the magnetite and hydrogen to carry out a deoxygenation reaction of the magnetite.
(27) In the reducing agent according to the present invention, a reaction temperature of the deoxygenation reaction may be set in a range of 300°C or higher and 450°C or lower.
(28) In the reducing agent according to the present invention, the magnetite may have a specific surface area in a range of 0.1 m²/g or more and 10 m²/g or less according to a BET method.
(29) In the reducing agent according to the present invention, the magnetite may have an average particle diameter in a range of 1 µm or more and 1,000 µm or less.
(30) In the reducing agent according to the present invention, the magnetite may have a bulk density in a range of 0.3 g/cm³ or more and 3 g/cm³ or less.

### [Advantageous Effects of Invention]

According to the present invention, it is possible to provide a method for producing a carbon material, which makes it possible to efficiently produce a carbon material by using a reducing agent having a high reducing ability to decompose carbon dioxide with a high reaction efficiency, a carbon material obtained by this method, and a method for decomposing carbon dioxide, which makes it possible to decompose carbon dioxide with a high reaction efficiency by using a reducing agent having a high reducing ability, as well as a reducing agent.

In addition, it is possible to effectively produce a carbon material by effectively using an exhaust gas (carbon dioxide or by-product hydrogen) or waste heat which is generated in a steel plant, and decomposing carbon dioxide with a high reaction efficiency by using a reducing agent having a high reducing ability.

### [Brief Description of Drawings]

FIG. 1 is a schematic diagram showing a configuration of a carbon material manufacturing plant that produces carbon according to a method for producing a carbon material according to a second embodiment and a steel plant that supplies an exhaust gas (carbon dioxide or by-product hydrogen) and waste heat to this carbon material manufacturing plant.
FIG. 2 is a flow chart showing a method for producing a carbon material according to first and second embodiments of the present invention.
FIG. 3 is a schematic diagram showing a crystal structure of a quarter unit lattice of magnetite.
FIG. 4 is a graph showing the results of Example 1.
FIG. 5 is a graph showing the results of Example 2.
FIG. 6 is a graph showing the results of Example 3.
FIG. 7 is a graph showing the results of Example 4.
FIG. 8 is a graph showing the results of Example 5.
FIG. 9 is a graph showing the results of Example 6.
FIG. 10 is an SEM photograph image of a product obtained after causing a reducing agent to react with carbon dioxide.
FIG. 11 is a graph showing measurement results of the oxygen deficiency δ of Example 7.
FIG. 12 is a graph showing measurement results of the oxygen defect consumption rate of Example 7.
FIG. 13 is a graph showing measurement results of the oxygen deficiency δ of Example 8.
FIG. 14 is a graph showing measurement results of the oxygen defect consumption rate of Example 8.
FIG. 15 is a graph showing the results of using nanoparticle magnetite of Example 9.
FIG. 16 is a graph showing the results of using fine particle magnetite of Example 9.
FIG. 17 is a graph showing the results of using powder magnetite of Example 9.
FIG. 18 shows XRD analysis results of a specimen after hydrogen reduction in Example 10.
FIG. 19 shows XRD analysis results of a specimen after carbon dioxide decomposition in Example 10.
FIG. 20 shows XRD analysis results of a specimen after hydrogen reduction in Example 11.
FIG. 21 shows XRD analysis results of a specimen after carbon dioxide decomposition in Example 11.

### [Description of Embodiments]

### (First embodiment)

Hereinafter, a method for producing a carbon material, a carbon material, a method for decomposing carbon dioxide, and a reducing agent according to a first embodiment of the present invention will be described with reference to the drawings. Embodiments to be described below are specifically described for a better understanding of the gist of the invention and do not limit the present invention unless otherwise specified. In addition, in the drawings used in the following description, for convenience, a portion that is the main part may be enlarged in some cases in order to make the features of the present invention easy to understand, and a dimensional ratio or the like of each component is not always the same as an actual one.

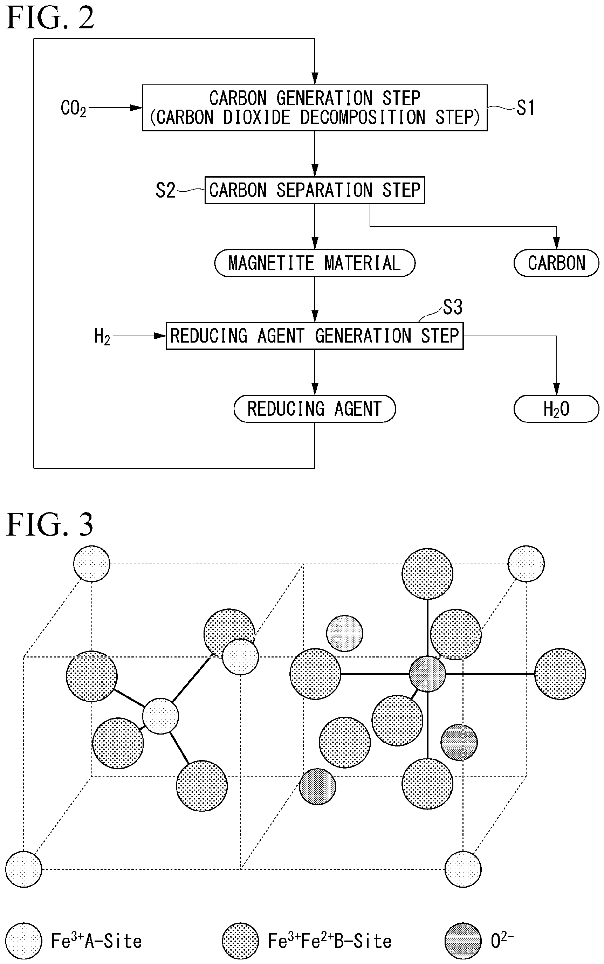

FIG. 2 is a flow chart stepwise showing the method for producing a carbon material and the method for decomposing carbon dioxide according to the first embodiment of the present invention.

First, the reducing agent that is used in the present embodiment will be described.

The reducing agent is a material that reacts with carbon dioxide to reduce the carbon dioxide and decompose it into carbon and oxygen in a carbon generation step (a carbon dioxide decomposition step) S1 described later. The reducing agent that is used in the present embodiment uses an oxygen-deficient iron oxide of magnetite (triiron tetraoxide) represented by Fe₃O_{4-δ} (where δ is 1 or more and less than 4) or an oxygen-completely deficient iron (δ = 4) which is obtained by completely reducing magnetite.

FIG. 3 is a schematic diagram showing a crystal structure of a quarter unit lattice of magnetite.

In terms of crystallography, magnetite has a spinel-type crystal lattice structure, where oxygen ions (O²⁻) are arranged in a cubic closest packing, and a +3 valent iron (Fe³⁺) and a +2 valent iron (Fe²⁺) are arranged at a ratio of 2:1 in the gaps (the A site and the B site). Magnetite is represented by Fe₃O₄ as a general formula.

The reducing agent according to the present embodiment is an oxygen-deficient iron oxide (1 ≤ δ < 4) that is obtained by releasing an oxygen ion at any position shown in FIG. 3 in a state where such a crystal structure of magnetite, that is, the spinel-type crystal lattice structure is maintained, or an oxygen-completely deficient iron (δ = 4) that is obtained by completely reducing magnetite. Such a reducing agent is produced in a reducing agent generation step, which will be described later.

The oxygen-deficient iron oxide is represented by Fe₃O_{4-δ}, where δ is set in a range of 1 or more and less than 4 depending on the rate of release of oxygen ions released from magnetite. In addition, in a case where all the oxygen ions are released from the magnetite (that is, δ = 4), the oxygen-completely deficient iron described above is obtained.

δ is referred to as the oxygen deficiency, and it is a ratio of the defected oxygen to the magnetite in the oxygen-deficient iron oxide that is in a state where the crystal structure of magnetite, that is, the spinel-type crystal lattice structure is maintained. Regarding such oxygen deficiency δ, in a case where the difference between the mass of magnetite before reacting with hydrogen in a reducing agent generation step S3 and the mass after the reaction is measured, the amount of mass reduction (the difference) is equal to the amount of oxygen released from the magnetite (the arrangement position of this released oxygen in the lattice becomes an atomic vacancy, that is, a defect), and thus the oxygen deficiency δ (δ = 1 to 4) can be calculated from the amount of mass reduction.

The sites from which oxygen ions have been released from magnetite become atomic vacancies in a state where the spinel-type crystal lattice structure is maintained, and as many cations as the released oxygen ions are confined in the crystal lattice, whereby the lattice spacing is in a state of being expanded. Atomic vacancies due to such release of oxygen cause, as a reducing agent, a deoxygenation reaction of carbon dioxide, that is, a reduction reaction.

Here, in order to maintain the activity of the obtained reducing agent, it is preferable to prevent the reducing agent from being oxidized due to, for example, the mixing of air into the reducing agent during the period from a reducing agent generation step S3 to a carbon generation step S1. For example, in a case where the reducing agent is configured to be transportable while the space between the reduction furnace and the carbon dioxide decomposition furnace is sealed to prevent air mixing, the reducing agent obtained in the reducing agent generation step S3 can be used in the carbon generation step S1 without being oxidized.

In the reducing agent (the oxygen-deficient iron oxide or the oxygen-completely deficient iron) according to the present embodiment, the average particle diameter may be any particle diameter larger than 1 µm. The average particle diameter is preferably 1 µm or more and less than 20 µm, and it is also preferably more than 50 µm and less than 200 µm.

In a case where the average particle diameter of the reducing agent is smaller than 1 µm, the rate of carbon monoxide generation increases at the time when carbon dioxide is decomposed, and the carbon recovery rate decreases according to the experimental results. In a case of using a reducing agent having an average particle diameter of 1 µm or more, a high carbon capture rate can be maintained, and at the same time, a trouble such as a phenomenon of sticking to the wall surface of the reaction device can be avoided since the agglomeration property of the reducing agent particles is reduced, whereby an application to an industrial reaction device such as a rotary kiln is possible.

Further, in a case of setting the average particle diameter of the reducing agent to less than 20 µm, a high reaction rate can be maintained. In addition, in a case where the average particle diameter of the reducing agent is more than 50 µm and 200 µm or less, the dustability of the particles is reduced, and the fluidization performance is improved, and thus an application to an industrial reaction device such as fluidized bed is possible. In this case, as compared with a rotary kiln type reaction device, solid-gas contact or heat transfer is good, a facility cost is low, and the size of the reaction device can be made compact.

A method for producing a carbon material according to the present embodiment has a carbon generation step (a carbon dioxide decomposition step) S1, a carbon separation step (a carbon capture step) S2, and a reducing agent generation step S3, and it adopts a recycling system in which the reducing agent is repeatedly used. In addition, a method for decomposing carbon dioxide according to the present embodiment has the carbon generation step (the carbon dioxide decomposition step) S1.

In the carbon generation step (the carbon dioxide decomposition step) S1, carbon dioxide (CO₂) introduced from the outside is allowed to react with the reducing agent described above to decompose the carbon dioxide into carbon and oxygen, and concurrently, the reducing agent is oxidized to magnetite.

In the carbon generation step S1, by using, for example, a reaction device (a carbon dioxide decomposition furnace) such as an air bubbling fluidized bed or a rotary kiln, a powdery reducing agent having, for example, an average particle diameter of about 1 µm to 500 µm comes into contact with gaseous carbon dioxide while the powdery reducing agent being stirred, whereby the carbon dioxide is decomposed (reduced). As the reaction device, a circulating fluidized bed can also be used; however, it has the following disadvantages as compared with the air bubbling fluidized bed, for example, the height of the entire reaction device is high, the facility cost is high, the design and operation of the particle recirculation loop are complicated, the retention time of the particles are short (the retention time in the reaction device is on the order of seconds), the particle diameter of the reducing agent that can be used is limited, the abrasion of the particles is accelerated, and the energy costs required for maintaining a high gas flow rate and circulating a powder are large.

The reaction temperature in the carbon generation step S1 may be in a range of 300°C or higher and 450°C or lower, and preferably in a range of 350°C or higher and 450°C or lower. In addition, the reaction pressure may be any reaction pressure in a range of 0.01 MPa or more and 5 MPa or less, and preferably in a range of 0.1 MPa or more and 1 MPa or less.

In this way, in a case of setting the reaction temperature in a range of 300°C or higher and 450°C or lower, the reducing agent can maintain the spinel-type crystal lattice structure. In a case where the reaction temperature is as high as, for example, 500°C or higher, there is a concern that the reducing agent cannot maintain the spinel-type crystal lattice structure due to repeated use of magnetite. Moreover, the energy consumed during the reaction increases.

In a case where the reaction pressure is 0.01 MPa or more, the reaction rate required for a practical process can be obtained, and in a case where it is 0.1 MPa or more, it is possible to directly deal with actual exhaust gas having a low carbon dioxide concentration. In addition, in a case where the reaction pressure is 5 MPa or less, the manufacturing cost of the device can be suppressed.

In the carbon generation step S 1, in order to raise the temperature to such a reaction temperature range, it is also preferable to effectively use, as a heat source, the heat (waste heat) generated in association with an operation of an ironwork, a thermal power plant, a cement plant, a garbage incineration facility, or the like, which is a carbon dioxide supply source, electricity and stored heat derived from renewable energy, and thermal energy of a high-temperature gas-cooled reactor which is a nuclear reactor capable of extracting high-temperature heat.

In the carbon generation step S 1, the decomposition (reduction) rate of carbon dioxide is increased by increasing the reaction temperature and the reaction pressure, and thus the efficiency of carbon dioxide treatment can be increased. On the other hand, in a case where the reaction temperature is too high, there is a risk that the spinel structure of the reducing agent is destroyed.

In the decomposition of carbon dioxide in the carbon generation step S 1, two-stage reactions represented by Formulae (1) and (2) occur.

CO₂ → CO (intermediate product) + O²⁻ (1)

CO → C + O² (2)

Then, the oxygen generated according to Formulae (1) and (2) is inserted into the atomic vacancy of the oxygen-deficient iron oxide (Formula (3)) or the oxygen-completely deficient iron (Formula (4)) according to Formula (3) and (4).

Fe₃O_{4-δ} + δO²⁻ → Fe₃O₄ (where δ is 1 or more and less than 4) (3)

3Fe + 4O²⁻ → Fe₃O₄ (4)

It is noted that in the method for decomposing carbon dioxide according to the present embodiment, only Formula (1) can be also carried out in the carbon generation step (the carbon dioxide decomposition step) S 1. The obtained carbon monoxide (CO) can be used, by being subjected to hydrogenation, as a raw material for obtaining useful chemical products such as hydrocarbons such as methane and methanol, and various resins.

In a case where the entire carbon dioxide is allowed to react until Formula (2) is completed, in the above-described reaction in the carbon generation step S 1, the generation of gas does not occur when the final product is produced. That is, it is conceived that the entire oxygen in the carbon dioxide is incorporated into the oxygen-deficient iron oxide or the oxygen-completely deficient iron. Taking this into account, the reaction between carbon dioxide and an oxygen-deficient iron oxide is represented by Formula (5), and the reaction between carbon dioxide and an oxygen-completely deficient iron is represented by Formula (6).

2Fe₃O_{4-δ} + δCO₂ → 2Fe₃O₄ + δC (where δ = 1 or more and less than 4) (5)

3Fe + 2CO₂ → Fe₃O₄ +2C (6)

The reason why the oxygen-deficient iron oxide and the oxygen-completely deficient iron, which are used as reducing agents in the carbon generation step S 1, can decompose carbon dioxide into carbon is that these reducing agents have a spinel-type crystal lattice structure, which is a metastable crystal structure that is formed in a non-equilibrium state, and thus tend to gradually react with oxygen even at room temperature and incorporate oxygen ions, thereby changing to more stable Fe₃O₄. That is, it is conceived to be because the unstable spinel-type crystal lattice structure having atomic vacancies in the lattice tends to change to a more stable spinel-type crystal lattice structure having no atomic vacancies.

In the process of stabilization (magnetitization) of the oxygen-deficient iron oxide or the oxygen-completely deficient iron, a crystal tends to maintain electrical neutrality in a case where an oxygen ion is incorporated into the crystal, and thus an electron tends to be released from the crystal surface. In the oxygen-deficient iron oxide or the oxygen-completely deficient iron, a +2 valent Fe (Fe²⁺) is present as an atom that can release an electron; however, due to the instability of the crystal of the oxygen-deficient iron oxide or the oxygen-completely deficient iron, it is conceived that a reduction potential different from that of the normal state is generated.

In the carbon generation step S 1, it is preferable that the oxygen concentration in the reaction environment is set to be kept at 4% by volume or less in order to maximize the ability to decompose carbon dioxide by the oxygen-deficient iron oxide or oxygen-completely deficient iron which is used as a reducing agent. In a case where the oxygen concentration in the reaction environment in the carbon generation step S1 is higher than 4% by volume, there is a concern that the oxygen in the reaction atmosphere is incorporated into the oxygen-deficient site of the reducing agent before the oxygen constituting carbon dioxide is incorporated into the reducing agent (the oxygen-deficient iron oxide or the oxygen-completely deficient iron), whereby the ability of the reducing agent to decompose carbon dioxide is reduced.

The carbon generated by the decomposition of carbon dioxide in the carbon generation step S 1 is generated as a nano-sized particulate carbon material having a particle diameter of 1 µm or less. In the carbon generation step S 1, under the same temperature condition, the reaction rate of Formula (1) described above is slower than the reaction rate of Formula (2); however, in a case of increasing the reaction rate of Formula (1), the reaction of Formula (2) proceeds rapidly, and fine nano-sized carbon particles can be generated. The reaction rates of Formula (1) and Formula (2) can be increased by increasing the oxygen deficiency δ and by increasing the reaction temperature and the reaction pressure.

Such nano-sized particulate carbon adheres to the surface of the magnetite that is generated by the oxidation of the oxygen-deficient iron oxide or the oxygen-completely deficient iron or is generated to cover the surface of the magnetite.

On the other hand, in the present embodiment, the reducing agent becomes magnetite (Fe₃O₄) due to the decomposition of carbon dioxide in the carbon generation step S 1, and thus hematite (Fe₂O₃) is not generated.

The carbon separation step (the carbon capture step) S2 separates magnetite generated in the carbon generation step S 1, which has the generated carbon adhered to the surface, that is, the oxidized reducing agent into carbon and magnetite.

In the present embodiment, the carbon is generated in a state of relatively firmly attached to the surface of the magnetite. For this reason, examples of the separation method for carbon include a method of scraping carbon from magnetite, for example, by a physical impact force, a shear force, or friction, and then separating the carbon according to the specific gravity or the particle diameter, a separation method by a magnetic force using the ferromagnetism of magnetite, and a method of selectively dissolving only magnetite or only carbon by using, for example, physical separation, a strong acid, or a solvent, thereby separating the carbon, such as chemical separation.

In the physical separation among them, the separated magnetite can be used as a raw material for generating a reducing agent in the reducing agent generation step S3, which will be described later.

On the other hand, in chemical separation, it is possible to easily obtain carbon, for example, in a case of dissolving magnetite using hydrochloric acid and recovering carbon that does not dissolve in hydrochloric acid by solid-liquid separation such as filtration. In this case, magnetite cannot be directly used as a raw material for generating a reducing agent in the reducing agent generation step S3, and a step of returning the generated iron chloride to magnetite by a hydrolysis reaction is required.

The carbon (the carbon material) obtained by the above steps is a nano-sized particulate carbon material having a particle diameter of 1 µm or less, and a carbon material having a particle diameter of more than 1 µm is rarely generated. Such a nano-sized carbon powder is high-purity carbon having a purity of, for example, 99% or more, and it can be directly used as carbon black, activated carbon, and graphite in functional carbon materials such as various catalysts, electrode materials, toners, and coloring agent.

In the reducing agent generation step S3, oxygen ions contained in the magnetite separated in the carbon separation step S2 or the magnetite introduced from the outside are released (subjected to a deoxygenation reaction) to generate an oxygen-deficient iron oxide in which any position of the oxygen atoms of magnetite is vacant or an oxygen-completely deficient iron in a state where the crystal structure of magnetite, that is, the spinel-type crystal lattice structure is maintained.

In the reducing agent generation step S3, the raw material of magnetite (the magnetite material) in a case where magnetite is introduced from the outside is not limited to pure magnetite, and it may be a raw material that contains other substances. It is also possible to use, for example, iron sand which is inexpensive and readily available.

In addition, as the magnetite material, it is also possible to use hematite (Fe₂O₃), a used heat pad (main component: iron hydroxide) according to the iron oxidation system, and the like.

The magnetite according to the present embodiment has a specific surface area in a range of 0.1 m²/g or more and 10 m²/g or less, preferably in a range of 0.3 m²/g or more and 8 m²/g or less, and more preferably in a range of 1 m²/g or more and 6 m²/g or less, where the specific surface area is according to a BET method. In a case where the magnetite has a specific surface area of 0.1 m²/g or more, the contact area between the solid and the gas, which is necessary for the solid-gas reaction, can be ensured, and the reaction rate necessary for a practical process can be obtained. In addition, in a case where the specific surface area of magnetite is 10 m²/g or less, not only a high reaction rate can be ensured but also the rate of carbon monoxide generation at the time when carbon dioxide is decomposed is low, whereby the carbon recovery rate can be improved.

It is noted that the reducing agent obtained by reducing the magnetite in the reducing agent generation step S3 according to the present embodiment has a large specific surface area as compared with the magnetite before reduction. The specific surface area of the reducing agent is 0.1 m²/g or more and 30 m²/g or less, preferably 0.3 m²/g or more and 25 m²/g or less, and more preferably 1 m²/g or more and 18 m²/g or less. The specific surface area of the reducing agent is 1 time or more and 3 times or less, preferably 1 time or more and 2.5 times or less, and more preferably 1 time or more and 2.0 times or less, with respect to the specific surface area of magnetite.

In addition, the magnetite according to the present embodiment has an average particle diameter in a range of 1 µm or more and 1,000 µm or less, preferably in a range of 1 µm or more and less than 20 µm, or in a range of more than 50 µm and 200 µm or less. In a case where the magnetite has an average particle diameter of 1 µm or more, the rate of carbon monoxide generation at the time when carbon dioxide is decomposed is low, whereby the carbon recovery rate can be improved. Further, in a case where the average particle diameter is set to be larger than 1 µm, the agglomeration property and dustability of the particles are reduced, the fluidity and handleability are improved, and thus troubles such as a phenomenon of sticking to the wall surface of the reactor and the formation of clinker can be avoided, whereby an application to an industrial reaction device such as a rotary kiln or a fluidized bed is possible. In addition, in a case where the magnetite has an average particle diameter of 1,000 µm or less, the contact area between the solid and the gas, which is necessary for the solid-gas reaction, can be ensured, and the reaction rate necessary for a practical process can be obtained.

In addition, the magnetite according to the present embodiment has a bulk density in a range of 0.3 g/cm³ or more and 3 g/cm³ or less, preferably in a range of 0.4 g/cm³ or more and 2 g/cm³ or less, and more preferably in a range of 0.5 g/cm³ or more and 1 g/cm³ or less. In a case where the magnetite has a bulk density of 0.3 g/cm³ or more, the agglomeration property and dustability of the particles are reduced, and the fluidity is improved, whereby an application to an industrial reaction device such as a rotary kiln or a fluidized bed is possible. In addition, in a case where the magnetite has a bulk density of 3 g/cm³ or less, the void ratio between particles and within the particles can be ensured, the reaction gas can easily diffuse into the particles, and the reaction rate necessary for a practical process can be obtained.

In the reducing agent generation step S3, by bringing a powdery magnetite material into contact with hydrogen gas while stirring the powdery magnetite material, by using a reaction device (a reduction furnace) such as a fluidized bed or a rotary kiln, the oxygen atom of magnetite in the magnetite material is released and react with hydrogen to generate water (a water vapor), and concurrently, the magnetite from which the oxygen atom has been released generates an oxygen-deficient iron oxide, in which a position from which an oxygen atom has been released is vacant, or an oxygen-completely deficient iron in a state where the crystal structure of magnetite, that is, the spinel-type crystal lattice structure is maintained.

In the reducing agent generation step S3, in a case where the magnetite material contains hematite, the hematite is reduced to magnetite, and the magnetite is further reduced to the oxygen-deficient iron oxide or the oxygen-completely deficient iron.

The reaction temperature in the reducing agent generation step S3 may be any temperature in a range of 300°C or higher and 450°C or lower and preferably in a range of 350°C or higher and 400°C or lower. In a case where the reaction temperature is 300°C or higher, the reaction rate necessary for a practical process can be obtained. Further, in a case where the reaction temperature is 450°C or lower, a high reactivity can be maintained without the breakage of the crystal structure of the reducing agent during the reaction, and thus the reducing agent can be used repeatedly. In addition, the energy consumption during the reaction can be suppressed.

In addition, the reaction pressure in the reducing agent generation step S3 may be any reaction pressure in a range of 0.1 MPa or more and 5 MPa or less, and preferably in a range of 0.1 MPa or more and 1 MPa or less. In a case where the reaction pressure is 0.1 MPa or more, the reaction rate required for a practical process can be obtained, and the size of the reaction device can be made compact. In addition, in a case where the reaction pressure is 5 MPa or less, the manufacturing cost of the device can be suppressed.

The concentration of the hydrogen gas that is used in the reducing agent generation step S3 may be any concentration in a range of 5% by volume or more and 100% by volume or less, and preferably in a range of 10% by volume or more and 90% by volume or less. Even in a case where the concentration of the hydrogen gas is, for example, about 90% by volume, there is substantially no significant difference in reduction ability as compared with hydrogen gas having a concentration of 100% by volume. As a result, in a case of using hydrogen gas having a concentration of about 90% by volume, which is lower in cost than hydrogen gas having a concentration of 100% by volume, it is possible to generate a reducing agent from magnetite at a low cost.

In the reduction of magnetite with hydrogen in the reducing agent generation step S3, a reducing agent is generated as follows.

Fe₃O₄ +δH₂ → Fe₃O_{4-δ} + δH₂O (where δ = 1 or more and less than 4) (7)

Fe₃O₄ + 4H₂ → 3Fe+ 4H₂O (8)

The oxygen-deficient iron oxide obtained in the reducing agent generation step S3 is represented by Fe₃O_{4-δ}, where δ is set in a range of 1 or more and less than 4 depending on the rate of release of oxygen ions released from magnetite. In addition, in a case where all the oxygen ions are released from the magnetite (that is, δ = 4), the oxygen-completely deficient iron is obtained.

The sites from which oxygen ions have been released from magnetite become atomic vacancies in a state where the crystal structure of magnetite, that is, the spinel-type crystal lattice structure is maintained, and as many cations as the released oxygen ions are confined in the crystal lattice, whereby the lattice spacing is in a state of being expanded. Atomic vacancies due to such release of oxygen cause, as a reducing agent, a deoxygenation reaction of carbon dioxide in the carbon generation step S1.

According to the method for producing a carbon material according to the present embodiment as described above, it is possible to efficently produce nano-sized carbon particles at a low cost by reducing carbon dioxide using, as a reducing agent, the oxygen-deficient iron oxide (Fe₃O_{4-δ} (where δ = 1 or more and less than 4)) which maintains the crystal structure of magnetite and has a large number of atomic vacancies due to the release of oxygen atoms or the oxygen-completely deficient iron (δ = 4) which is obtained by completely reducing magnetite.

In addition, in a case of supplying the magnetite material (the oxidized reducing agent) from which carbon has been separated in the carbon separation step S2 to the reducing agent generation step S3 and converting it into a reducing agent again by using hydrogen, it is possible to construct a closed system in which carbon dioxide is decomposed to produce a carbon material, which can contribute to the reduction of the emission of carbon dioxide, which is a greenhouse gas.

In addition, in the carbon generation step (the carbon dioxide decomposition step) S1, the carbon separation step S2, and the reducing agent generation step S3, in a case of effectively using, for example, the heat (waste heat) generated in association with an operation of an ironwork, a thermal power plant, a cement plant, a garbage incineration facility, or the like, as a heat source during the reaction, it is possible to suppress the amount of waste heat released into the atmospheric air, which contributes to the prevention of global warming. In addition, in a case of effectively using electricity and stored heat derived from renewable energy, and thermal energy of a high-temperature gas-cooled reactor which is a nuclear reactor capable of extracting high-temperature heat, it is possible to suppress CO₂ generation, which contributes to the carbon neutrality and the decarbonized society.

Although the embodiments according to the present invention have been described above, such an embodiment is presented as an example and thus is not intended to limit the scope of the invention. This embodiment can be implemented in various other forms, and various omissions, replacements, and changes can be made without departing from the gist of the invention. This embodiment and the modification thereof are included in the scope of the invention described in the claims and the scope equivalent thereto, as they are included in the scope and gist of the invention.

For example, although the general composition of magnetite is Fe₃O₄ in the above-described embodiment, the magnetite material that is used in the present embodiment may contain other substances such as titanium (Ti). These other substances, such as titanium, may contribute to the reduction of carbon dioxide as catalysts.

### (Second embodiment)

Hereinafter, a method for producing a carbon material, and a method for decomposing carbon dioxide according to a second embodiment of the present invention will be described with reference to the drawings. The second embodiment differs from the first embodiment in that the exhaust gas generated mainly in a steel plant is used as any (all or part) of carbon dioxide to be subjected to the reaction in the carbon generation step and hydrogen to be subjected to the reaction in the reduction process. In the following description of the second embodiment, only parts different from the first embodiment will be described. In the second embodiment, the same description as in the first embodiment is omitted.

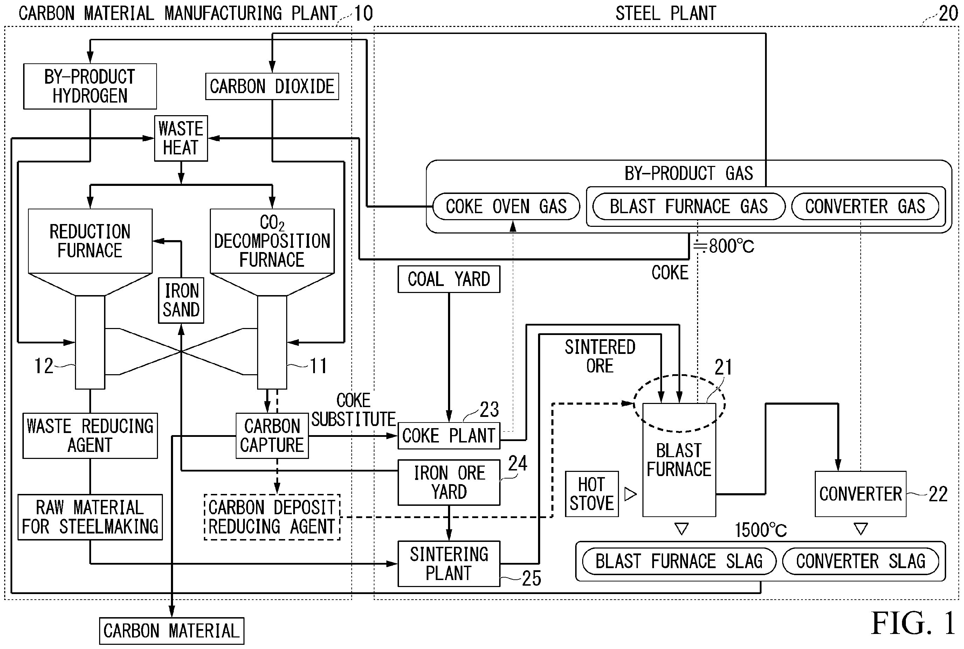

FIG. 1 is a schematic diagram showing a configuration of a carbon material manufacturing plant that produces carbon according to a method for producing a carbon material according to a second embodiment of the present invention and a steel plant that supplies an exhaust gas (carbon dioxide or by-product hydrogen) and waste heat to this carbon material manufacturing plant.

In addition, FIG. 2 is a flow chart stepwise showing the method for producing a carbon material according to the second embodiment of the present invention.

First, the reducing agent that is used in the method for producing a carbon material according to the present embodiment will be described.

The reducing agent is a material that reacts with carbon dioxide to reduce the carbon dioxide and decompose it into carbon and oxygen in a carbon generation step S1 (a carbon dioxide decomposition step) described later. The reducing agent that is used in the present embodiment uses an oxygen-deficient iron oxide of magnetite (triiron tetraoxide) represented by Fe₃O_{4-δ} (where δ is 1 or more and less than 4) or an oxygen-completely deficient iron.

A carbon material manufacturing plant 10 that produces a carbon material according to a method for producing a carbon material according to the present embodiment has a carbon dioxide decomposition furnace 11 and a reduction furnace 12. On the other hand, a steel plant 20 to which such a carbon material manufacturing plant 10 is attached may have any known configuration and has various facilities such as a blast furnace 21, a converter 22, a coke plant 23, an iron ore storage facility (iron ore yard) 24, and a sintering plant 25.

The carbon dioxide decomposition furnace 11 is composed of, for example, a reaction device such as a fluidized bed or a rotary kiln. In the carbon dioxide decomposition furnace 11, a carbon generation step S1 described later is executed, and a reducing agent is allowed to react with carbon dioxide, which is one of the exhaust gases generated in the blast furnace 21 or the converter 22 of the steel plant 20, whereby carbon dioxide is reduced to generate carbon. In addition, the waste heat generated in the steel plant 20 (for example, the blast furnace 21, the converter 22, and the coke plant 23) is introduced into the carbon dioxide decomposition furnace 11, and heating is carried out so that the temperature of the inside of the furnace is a predetermined reaction temperature, for example, 300°C or higher and 450°C or lower.

The reduction furnace 12 is composed of, for example, a reaction device such as a fluidized bed or a rotary kiln. In the reduction furnace 12, a reducing agent generation step S3, which will be described later, is executed, and the reducing agent (the magnetite) oxidized in the carbon dioxide decomposition furnace 11 is allowed to react with hydrogen (by-product hydrogen), which is one of the exhaust gases generated in the coke plant 23 of the steel plant 20, whereby the oxidized reducing agent is reduced to generate a reducing agent. In addition, the waste heat generated in the steel plant 20 (for example, the blast furnace 21, the converter 22, and the coke plant 23) is introduced into the reduction furnace 12, and heating is carried out so that the temperature of the inside of the furnace is a predetermined reaction temperature, for example, 300°C or higher and 450°C or lower.

A blast furnace gas or a converter gas (an exhaust gas) is generated from the blast furnace 21 or the converter 22 of the steel plant 20 in the process of steelmaking. Such a blast furnace gas and such a converter gas include carbon dioxide. Carbon dioxide contained in the blast furnace gas and the converter gas is introduced into the carbon dioxide decomposition furnace 11 of the carbon material manufacturing plant 10 through a pipe or the like. In addition, hydrogen contained in the coke oven gas generated from the coke plant 23 is introduced into the reduction furnace 12 of the carbon material manufacturing plant 10 through a pipe or the like.

In addition, the blast furnace 21, the converter 22, and the coke plant 23 release a large amount of waste heat to the outside in association with the operation. Such waste heat is introduced into the carbon dioxide decomposition furnace 11 or the reduction furnace 12 through a heat exchanger or the like and used as a heat source for raising the temperature of the carbon dioxide decomposition furnace 11 or the reduction furnace 12 to the reaction temperature.

In addition, the residual heat of the blast furnace slag generated in the blast furnace 21 or the converter slag generated in the converter 22 can be introduced into the carbon dioxide decomposition furnace 11 or the reduction furnace 12 and used as a heat source for raising the temperature of the carbon dioxide decomposition furnace 11 or the reduction furnace 12 to the reaction temperature.

The method for producing a carbon material according to the present embodiment, which is carried out in the carbon material manufacturing plant 10 described above, has a carbon generation step (a carbon dioxide decomposition step) S1 and a reducing agent generation step S3. In addition, it may further have a carbon separation step (carbon capture step) S2.

In addition, a method for decomposing carbon dioxide according to the present embodiment has the carbon generation step (the carbon dioxide decomposition step) S1.

In the carbon generation step S1, carbon dioxide (CO₂) which is included in the exhaust gas generated, for example, by the operation of the blast furnace 21 or the converter 22 of the steel plant 20 is allowed to react with the reducing agent described above to decompose the carbon dioxide into carbon and oxygen, and concurrently, the reducing agent is oxidized to magnetite.

In the carbon generation step S1, by using, for example, a reaction device such as an air bubbling fluidized bed or rotary kiln of the carbon dioxide decomposition furnace 11, a powdery reducing agent having, for example, an average particle diameter of about 1 µm to 500 µm comes into contact with gaseous carbon dioxide while the powdery reducing agent being stirred, whereby the carbon dioxide generated in the blast furnace 21 or the converter 22 is decomposed (reduced). It is noted that as the reaction device, a circulating fluidized bed can also be used; however, it has the following disadvantages as compared with the air bubbling fluidized bed, for example, the height of the entire reaction device is high, the facility cost is high, the design and operation of the particle recirculation loop are complicated, the retention time of the particles are short (the retention time in the reactor is on the order of seconds), the particle diameter of the reducing agent that can be used is limited, the abrasion of the particles is accelerated, and the energy costs required for maintaining a high gas flow rate and circulating a powder are large.

The reaction temperature in the carbon generation step S1 may be in a range of 300°C or higher and 450°C or lower, and preferably in a range of 350°C or higher and 400°C or lower. In the carbon generation step S1, in order to raise the temperature to such a reaction temperature range, the heat (waste heat) generated in association with the operation of the blast furnace 21, the converter 22, or the coke plant 23 is used as a heat source.

The reaction pressure in the carbon generation step S1 may be any reaction pressure in a range of 0.01 MPa or more and 5 MPa or less, and preferably in a range of 0.1 MPa or more and 1 MPa or less. The decomposition (reduction) rate of carbon dioxide is increased by increasing the reaction pressure, and thus the efficiency of carbon dioxide treatment can be increased.

Such nano-sized particulate carbon adheres to the surface of the magnetite that is generated by the oxidation of the oxygen-deficient iron oxide or the oxygen-completely deficient iron or is generated to cover the surface of the magnetite. The generated carbon deposit reducing agent (magnetite) can be introduced into the blast furnace 21 of the steel plant 20 and used as a raw material for steelmaking.

In addition, it is also possible to separate carbon from the carbon deposit reducing agent (magnetite) generated in the carbon generation step S1.

In addition, it is also possible to supply the carbon obtained in the carbon separation step S2 to the coke plant 23 of the steel plant 20 and use it as a substitute for coke that is consumed in the blast furnace 21 of the steel plant 20.

In the reducing agent generation step S3, by reacting hydrogen with magnetite, oxygen ions contained in the magnetite are released (subjected to a deoxygenation reaction) to generate an oxygen-deficient iron oxide in which any position of the oxygen atoms of magnetite is vacant or an oxygen-completely deficient iron in a state where the crystal structure of magnetite, that is, the spinel-type crystal lattice structure is maintained.

The raw material of magnetite (the magnetite material) that is introduced in the reducing agent generation step S3 is not limited to pure magnetite, and it may be a raw material that includes other substances. It is possible to use, for example, iron sand contained in the iron ore in the iron ore storage facility (iron ore yard) 24 of the steel plant 20. In a case of using the iron sand generated from the iron ore storage facility (iron ore yard) 24 as the magnetite material, it is possible to easily obtain magnetite at a low cost. In addition, as the magnetite material, it is also possible to use hematite (Fe₂O₃), a used heat pad (main component: iron hydroxide) according to the iron oxidation system, and the like.

In a part of ironworks, iron sand is used as a raw material instead of the part of the iron ore, however, the iron sand after being used as a magnetite material before steelmaking can also be used as a raw material for steelmaking. In this case, there is no need to separately prepare the magnetite material, the iron sand can be used as a raw material for steelmaking even after use, and there is no need for disposal and the like, which is efficient.

On the other hand, in a case of carrying out the carbon separation step S2, it is possible to use the magnetite (the oxidized reducing agent) separated in the carbon separation step S2 as the magnetite material. In this case, it is possible to realize a closed system of magnetite, in which magnetite is recyclably used within the carbon material manufacturing plant 10.

In addition, hydrogen (by-product hydrogen), which is one of the exhaust gases generated in the coke plant 23 of the steel plant 20, can be used as the hydrogen that is introduced in the reducing agent generation step S3. This makes it possible to effectively use the hydrogen (the by-product hydrogen) generated in the coke plant 23 of the steel plant 20.

In the reducing agent generation step S3, by bringing a powdery iron sand (a magnetite material) from the iron ore storage facility (iron ore yard) 24 into contact with the hydrogen (the by-product hydrogen) generated in the coke plant 23 of the steel plant 20 while stirring the powdery iron sand, by using a reaction device such as a fluidized bed or a rotary kiln, the oxygen atom of magnetite in the magnetite material is released and react with hydrogen to generate water (a water vapor). In addition, the magnetite from which the oxygen atom has been released becomes an oxygen-deficient iron oxide, in which a position from which an oxygen atom has been released is vacant, or an oxygen-completely deficient iron in a state where the crystal structure of magnetite, that is, the spinel-type crystal lattice structure is maintained.

The reaction temperature in the reducing agent generation step S3 may be any temperature in a range of 300°C or higher and 450°C or lower and preferably in a range of 350°C or higher and 400°C or lower. In a case where the reaction temperature is 300°C or higher, the reaction rate necessary for a practical process can be obtained. Further, in a case where the reaction temperature is 450°C or lower, a high reactivity can be maintained without the breakage of the crystal structure of the reducing agent during the reaction, and thus the reducing agent can be used repeatedly. In addition, the energy consumption during the reaction can be suppressed.

In the reducing agent generation step S3, in order to raise the temperature to such a reaction temperature range, the heat (waste heat) generated in association with the operation of the blast furnace 21, the converter 22, or the coke plant 23 is used as a heat source.

The concentration of the hydrogen gas that is used in the reducing agent generation step S3 may be any concentration in a range of 5% by volume or more and 100% by volume or less, and preferably in a range of 10% by volume or more and 90% by volume or less. Even in a case where the concentration of the hydrogen gas is, for example, about 90% by volume, there is substantially no significant difference in reduction ability as compared with hydrogen gas having a concentration of 100% by volume. As a result, in a case of using hydrogen gas having a concentration of about 90% by volume, which is lower in cost than hydrogen gas having a concentration of 100% by volume, for example, the hydrogen gas generated in the steel plant 20, it is possible to generate a reducing agent from magnetite at a low cost.

In the reducing agent (the oxygen-deficient iron oxide or the oxygen-completely deficient iron) according to the present embodiment which is obtained in this way, the average particle diameter may be larger than 1 µm. The average particle diameter is preferably 1 µm or more and less than 20 µm, and it is also preferably more than 50 µm and less than 200 µm.

Here, in order to maintain the activity of the obtained reducing agent, it is preferable to prevent the reducing agent from being oxidized due to, for example, the mixing of air into the reducing agent during the period from a reducing agent generation step S3 to a carbon generation step S1. For example, in a case where the reducing agent is configured to be transportable while the space between the reduction furnace 12 and the carbon dioxide decomposition furnace 11 is sealed to prevent air mixing, the reducing agent obtained in the reducing agent generation step S3 can be used in the carbon generation step S1 without being oxidized.

It is noted that in the reducing agent generation step S3, a part or whole of the reducing agent oxidized through the carbon generation step S1 can be also supplied, as a waste reducing agent, to the sintering plant 25 of the steel plant 20. Such a waste reducing agent is supplied to the blast furnace 21 as a raw material for steelmaking. This makes it possible to effectively use the reducing agent that has been repeatedly used or the reducing agent that has a reduced reaction ability without discharging it as a waste material.

According to the method for producing a carbon material according to the present embodiment as described above, it is possible to produce a carbon material at a low cost by reducing carbon dioxide using, as a reducing agent, the oxygen-deficient iron oxide (Fe₃O_{4-δ} (where δ = 1 or more and less than 4)) which maintains the crystal structure of magnetite and has a large number of atomic vacancies due to the release of oxygen atoms or the oxygen-completely deficient iron (δ = 4) which is obtained by completely reducing magnetite.

In a case of reducing carbon dioxide, which is an exhaust gas that is generated in a steel plant, it is possible to contribute to the reduction of the emission of carbon dioxide, which is a greenhouse gas that is released into the atmospheric air from a steel plant, and concurrently, it is possible to more efficiently manufacture nano-sized carbon particles at a lower cost.

In addition, in a case of supplying the magnetite (the oxidized reducing agent) to the reducing agent generation step S3 and converting it into a reducing agent again by using hydrogen, which is an exhaust gas generated in a steel plant, it is possible to effectively use the exhaust gas generated in a steel plant, and it is possible to reduce the magnetite (the oxidized reducing agent) at a low cost, thereby generating a reducing agent that is used in the decomposition of carbon dioxide. In addition, in a case of using, as magnetite, the oxidized reducing agent used in the decomposition of carbon dioxide, it is possible to construct a closed system in which carbon dioxide is decomposed to produce a carbon material.

In addition, in a case of using, as magnetite, the iron sand contained in the iron ore that is used in a steel plant, it is possible to decompose carbon dioxide at a low cost, thereby producing a carbon material, even in a case where the reducing agent is not repeatedly used.

In addition, in a case of supplying the reducing agent oxidized through the carbon generation step (the carbon dioxide decomposition step) S1 to the steel plant as a raw material for steelmaking, which is consumed in the steel plant, or supplying the carbon generated in the carbon generation step S1 to the steel plant as a substitute for coke that is consumed in the steel plant, it is possible to reduce the steelmaking cost in the steel plant and concurrently, it is possible to reduce discharged materials generated in the production of the carbon material.

Further, in a case of heating a reaction device in the carbon generation step (the carbon dioxide decomposition step) S1 by using the waste heat generated in the steel plant, or heating a reaction device in the reducing agent generation step S3 by using the waste heat generated in the steel plant, it is possible to effectively use such waste heat, and concurrently, the waste heat generated in the steel plant is not allowed to be released into the atmospheric air, which contributes to the prevention of global warming, the carbon neutrality, and the realization of the decarbonized society.

Although the embodiments according to the present invention have been described above, such an embodiment is presented as an example and thus is not intended to limit the scope of the invention. This embodiment can be implemented in various other forms, and various omissions, replacements, and changes can be made without departing from the gist of the invention. This embodiment and the modification thereof are included in the scope of the invention described in the claims and the scope equivalent thereto, as they are included in the scope and gist of the invention.

For example, although the general composition of magnetite is Fe₃O₄ in the above-described embodiment, the magnetite material that is used in the present embodiment may contain other substances such as titanium (Ti). These other substances, such as titanium, may contribute to the reduction of carbon dioxide as catalysts.

It is noted that in the embodiments described above, although exhaust gases generated in a steel plant are used for both carbon dioxide and hydrogen, the exhaust gas may be used for only one of them.

### [Examples]

Hereinafter, the effect of the present invention was verified. Table 1 summarizes the properties of each of magnetite materials used in Examples.

**[Table 1]**

| Kind of magnetite | Particle diameter distribution (µm) | | | Specific surface area (m²/g) | Bulk density (g/cm³) |
|---|---|---|---|---|---|
| | 20% of volume accumulation | 50% of volume accumulation (volume accumulated average diameter) | 80% of volume accumulation | | |
| Nanoparticle magnetite | 0.59 | 0.80 | 1.73 | 10.20 | 0.72 |
| Fine particle magnetite | 0.82 | 1.13 | 1.61 | 5.28 | 0.47 |
| Powder magnetite | 11.02 | 39.07 | 100.47 | 0.39 | 1.88 |
| Powder magnetite (having large particle diameter) | 18.23 | 68.74 | 89.42 | 0.33 | 2.20 |
| Iron sand made in Japan | 2.10 | 4.90 | 10.91 | 3.55 | 2.35 |
| Iron sand made in New Zealand | 3.05 | 6.63 | 13.26 | 2.29 | 2.37 |
| Copper slag | 6.17 | 15.87 | 28.67 | 0.75 | 1.10 |
| Iron powder | 72.66 | 103.78 | 136.90 | 0.10 | 2.59 |
| Hematite | 0.52 | 1.29 | 2.41 | 3.96 | 0.59 |
| Used heat pad | 146.20 | 388.90 | 732.10 | 122.26 | 1.00 |

### (Example 1)

An experiment was carried out to examine the relationship between the reaction temperature and the oxygen deficiency δ in the reducing agent generation step.

Using a fixed bed reactor as a reaction device, 1 g of magnetite (average particle diameter: about 800 nm, specific surface area according to BET method: 10.2 m²/g, bulk density: 0.7 g/cm³) was allowed to react with hydrogen to generate a reducing agent which is obtained by reducing magnetite while maintaining the crystal structure of the magnetite.

It is noted that the particle diameter distribution or average particle diameter of the magnetite can be checked by a particle diameter distribution measuring device (MT3300EXII: manufactured by MicrotracBEL Corp.), and the crystal structure can be checked by an X-ray diffraction device (D2 PHASER: manufactured by Bruker).

The reaction time was set to 1 hour, the hydrogen flow rate was set to 1.0 L/min, the hydrogen concentration was set to 100% by volume, and the reaction temperature was set to 280°C, 300°C, 320°C, 350°C, 360°C, and 370°C, and then magnetite was reduced with hydrogen (subjected to a deoxygenation reaction) to obtain a specimen (a reducing agent) at each of the reaction temperatures. Then, regarding the reducing agent (the oxygen-deficient iron oxide or the oxygen-completely deficient iron) obtained at each of the reaction temperatures, the amount of mass reduction before and after the reaction was regarded as the amount of oxygen released from the magnetite, and the oxygen deficiency δ of the reducing agent was calculated.

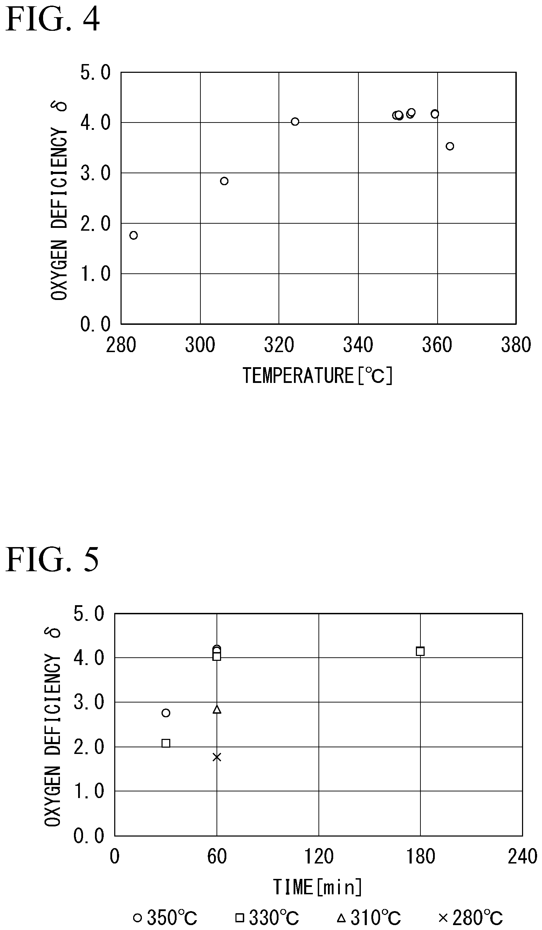

The results of Example 1 are shown graphically in FIG. 4. It is noted that the point at which the oxygen deficiency δ exceeds 4 in FIG. 4 is a measurement error, at which δ is substantially 4. This point also applies to the following examples.

According to the results shown in FIG. 4, it could be confirmed that in a case of setting the reaction temperature in a range of 320°C or more and 360°C or less under the reaction conditions described above, it is possible to maximize the oxygen deficiency δ, and it is possible to obtain δ = 4, that is, it is possible to obtain the oxygen-completely deficient iron (δ = 4) which is obtained by completely reducing magnetite.

### (Example 2)

An experiment was carried out to examine the relationship between the reaction time and the oxygen deficiency δ in the reducing agent generation step.

Using a fixed bed reactor as a reaction device, 1 g of magnetite (particle diameter distribution: 50 to 100 nm) was allowed to react with hydrogen to generate a reducing agent which is obtained by reducing magnetite while maintaining the crystal structure of the magnetite.

The reaction temperature was set to 280°C, 310°C, 330°C, and 350°C, the reaction time was set to 30 minutes, 60 minutes, and 180 minutes, and magnetite was reduced with hydrogen, thereby obtaining a reducing agent at each of reaction temperatures and each of reaction times. Then, the oxygen deficiency δ of the reducing agent was calculated. Conditions other than the reaction temperature and the reaction time are the same as in Example 1.

The results of Example 2 are shown graphically in FIG. 5.

According to the results shown in FIG. 5, in a case where the reaction temperature is 330°C or higher under the reaction conditions described above, it could be confirmed that it is possible to maximize the oxygen deficiency δ in a case of setting the reaction time (the reduction time) to exceed 60 minutes, and it is possible to obtain δ = 4, that is, it is possible to obtain the oxygen-completely deficient iron which is obtained by completely reducing magnetite. Further, in a case where the reaction temperature is in a range of 330°C or higher and 350°C or lower, it could be confirmed that it is possible to obtain an oxygen-deficient iron oxide which maintains the crystal structure of magnetite and has δ of 2 to 2.8 even in a case where the reaction time is about 30 minutes.

### (Example 3)

An experiment was carried out to examine the relationship between the hydrogen flow rate and the oxygen deficiency δ in the reducing agent generation step.

Using a fixed bed reactor as a reaction device, 1 g of magnetite (particle diameter distribution: 50 to 100 nm) was allowed to react with hydrogen to generate a reducing agent which is obtained by reducing magnetite while maintaining the crystal structure of the magnetite.

The reaction temperature was set to 330°C, the hydrogen flow rate was set to 0.1 L/min, 0.25 L/min, 0.5 L/min, 0.75 L/min, and 1.0 L/min, and magnetite was reduced with hydrogen, thereby obtaining a specimen at each of the hydrogen flow rates. Then, the oxygen deficiency δ of the reducing agent was calculated. Conditions other than the reaction temperature and the hydrogen flow rate are the same as in Example 1.

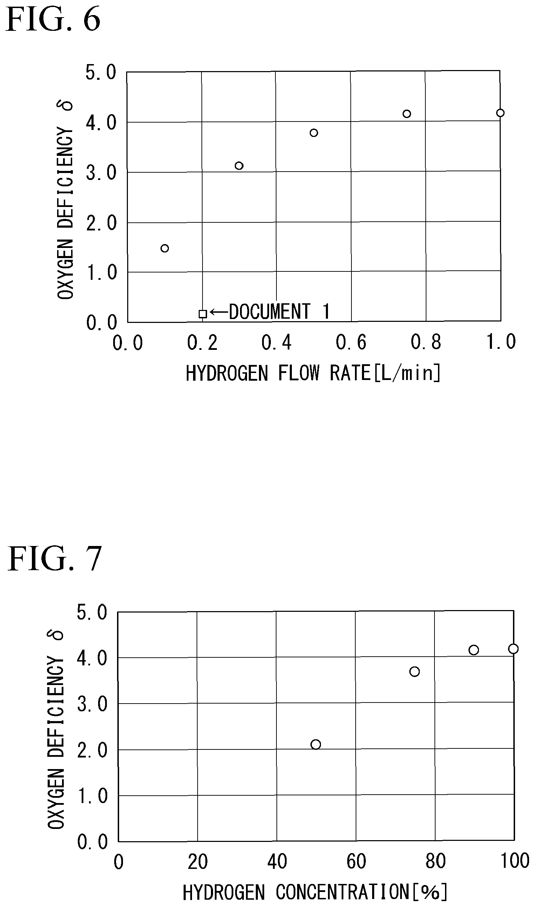

The results of Example 3 are shown graphically in FIG. 6. It is noted that the oxygen deficiency δ described in Document 1 is also described as a reference.

According to the results shown in FIG. 6, in a case where the hydrogen flow rate is 0.75 L/min or more under the reaction conditions described above, it could be confirmed that it is possible to maximize the oxygen deficiency δ, and it is possible to obtain δ = 4, that is, it is possible to obtain the oxygen-completely deficient iron. In addition, it could be confirmed that it is possible to obtain an oxygen-deficient iron oxide having δ of more than 3.5 even in a case where the hydrogen flow rate is about 0.5 L/min.

### (Example 4)

An experiment was carried out to examine the relationship between the hydrogen concentration and the oxygen deficiency δ in the reducing agent generation step.

The reaction temperature was set to 330°C, the hydrogen concentrations were set to 50% by volume, 75% by volume, 90% by volume, and 100% by volume, and magnetite was reduced with hydrogen, thereby obtaining a specimen at each of the hydrogen concentrations. Then, the oxygen deficiency δ of the reducing agent was calculated from each of the obtained reducing agents. Conditions other than the reaction temperature and the hydrogen concentration are the same as in Example 1.

The results of Example 4 are shown graphically in FIG. 7.

According to the results shown in FIG. 7, in a case where the hydrogen concentration is 90% by volume or more under the reaction conditions described above, it could be confirmed that it is possible to maximize the oxygen deficiency δ, and it is possible to obtain δ = 4, that is, it is possible to obtain the oxygen-completely deficient iron. Even in a case where the hydrogen gas has a concentration of about 90% by volume, there is substantially almost no difference in reduction ability as compared with the hydrogen gas having a concentration of 100% by volume, and in a case of using hydrogen gas having a concentration of about 90% by volume, which is lower in cost than hydrogen gas having a concentration of 100% by volume, it is possible to generate a reducing agent having a maximized oxygen deficiency δ at a low cost. In addition, it could be confirmed that it is possible to obtain an oxygen-deficient iron oxide having δ of more than 3.5 even in a case where the concentration of the hydrogen gas is about 75% by volume.

### (Example 5)

An experiment was carried out to examine the relationship between the reaction temperature and the oxygen defect consumption rate in the carbon generation step.

The oxygen defect consumption rate is the rate at which an oxygen ion in carbon dioxide is incorporated into an atomic vacancy in a lattice of a spinel-type crystal lattice structure of a reducing agent in a case where a certain amount of reducing agent is allowed to react with carbon dioxide, and it is in a range of 0 to 100%. It indicates that the closer this value is to 100%, the higher ability to decompose (reduce) carbon dioxide the reducing agent has.

Using a fixed bed reactor as a reaction device, a reaction with carbon dioxide was carried out at a reaction temperature in a range of 315°C to 390°C by using a reducing agent (an oxygen-completely deficient iron) having an oxygen deficiency δ of approximately 4, thereby generating carbon. Then, the oxygen defect consumption rate was calculated based on a difference between the mass of the reducing agent (magnetite) before the reaction and the mass of the oxidized reducing agent after the reaction and a difference between the oxygen deficiency δ before the reaction and the oxygen deficiency δ after the reaction.

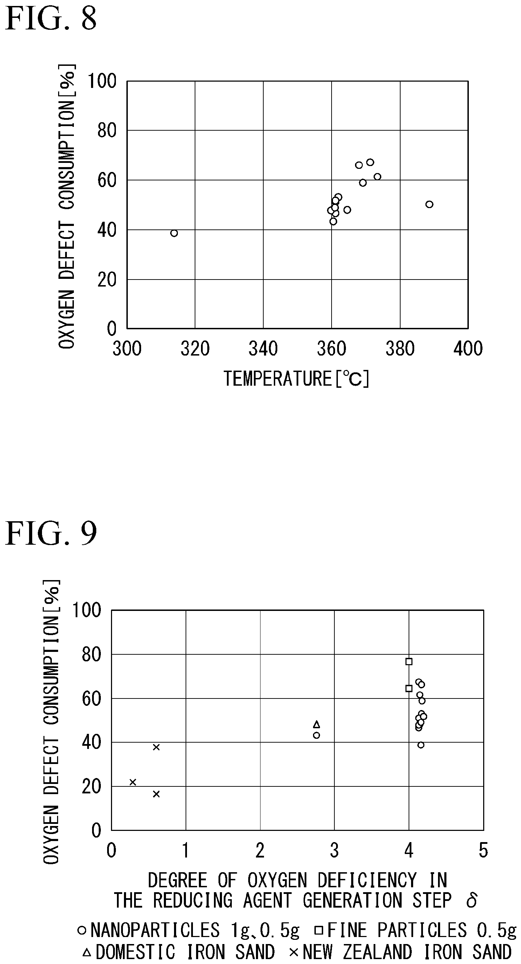

The results of Example 5 are shown graphically in FIG. 8.

According to the results shown in FIG. 8, in a case where the reaction temperature is 360°C or higher under the reaction conditions described above, the oxygen defect consumption rate is 40% or higher. In particular, in a case where the reaction temperature is 370°C or higher, the oxygen defect consumption rate is 50% or higher, and it is possible to incorporate the oxygen ion in carbon dioxide into 50% or more of the total number of atomic vacancies in the lattice of the spinel-type crystal lattice structure of the reducing agent. Therefore, it was confirmed that in a case of setting the reaction temperature in the carbon generation step to 360°C or higher, it is possible to efficiently use the reducing agent to decompose carbon dioxide, thereby generating carbon.

### (Example 6)

An experiment was carried out to examine the relationship between the kind of magnetite material and the oxygen defect consumption rate in the carbon generation step and the oxygen deficiency δ in the reducing agent generation step.

As magnetite materials, 1 g and 0.5 g of nanoparticle magnetite having an average particle diameter of about 800 nm, 0.5 g of fine particle magnetite having an average particle diameter of about 1.1 µm, 1 g of iron sand made in Japan, and 1 g of iron sand made in New Zealand were prepared. Then, using each magnetite material, each magnetite material was reduced to generate a reducing agent by using a fixed bed reactor as a reaction device under the conditions of a reaction temperature of 350°C, a reaction time of 1 hour, a hydrogen flow rate of 1.0 L/min, and a hydrogen concentration of 100% by volume, and the oxygen deficiency δ of each of these reducing agents was calculated.

In addition, as a result of measuring the specific surface area of the reducing agent that had been used to reduce the fine particle magnetite, it was 9.36 m²/g. It can be seen that the specific surface area has increased about 1.77 times from 5.28 m²/g before the reduction.

Next, using each reducing agent, a reaction with carbon dioxide was carried out at a reaction temperature of 360°C by using a fixed bed reactor as a reaction device, and the oxygen defect consumption rate was calculated based on a difference between the mass of the reducing agent before the reaction and the mass of the oxidized reducing agent after the reaction and a difference between the oxygen deficiency δ before the reaction and the oxygen deficiency δ after the reaction.

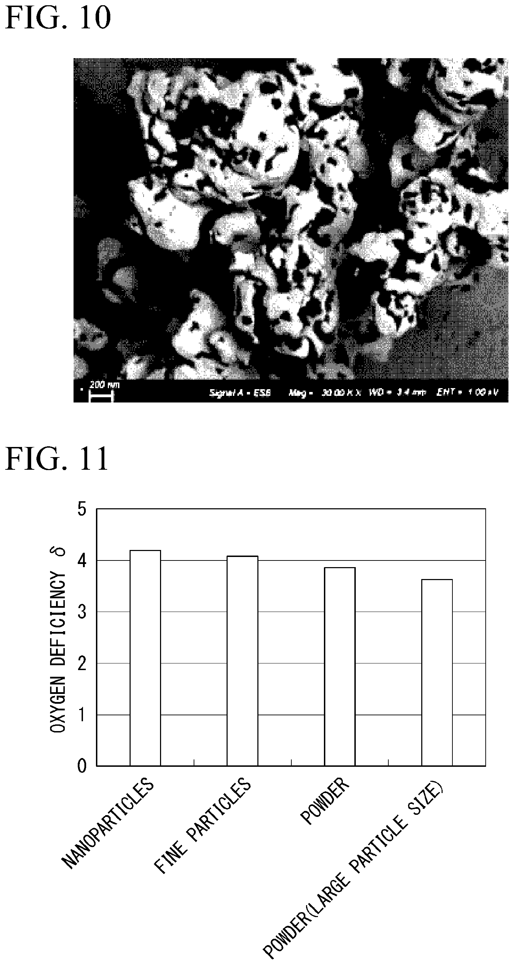

The results of Example 6 are shown graphically in FIG. 9. In addition, FIG. 10 shows an SEM photograph image of a product obtained after reacting carbon dioxide with the reducing agent (δ = 4) generated by hydrogen reduction of the fine particle magnetite.

According to the results shown in FIG. 9, it could be confirmed that most of the reducing agents generated by reduction with hydrogen using the nanoparticle magnetite and the fine particle magnetite have an oxygen deficiency δ of 4, and almost the entire oxygen in the magnetite is released, whereby the oxygen-completely deficient iron having atomic vacancies is obtained. On the other hand, it was found that the iron sand made in New Zealand has an oxygen deficiency δ of less than 1 after the hydrogen reduction and has a low ability to decompose (reduce) carbon dioxide as a reducing agent.

In addition, it could be confirmed that regarding the oxygen defect consumption rate of these reducing agents, the reducing agent prepared using fine particle magnetite has an oxygen defect consumption rate of about 60% to 80%, and thus the ability to decompose carbon dioxide is particularly excellent. From these results, it was found that it is particularly preferable to use fine particle magnetite having an average particle diameter of about 1.1 µm as a magnetite material.

In addition, in the SEM photograph image shown in FIG. 10, the white portion of the amorphous product indicates the oxidized reducing agent, and the black portion indicates the nano-sized carbon particles, and thus it can be confirmed that carbon is generated by causing the reducing agent to react with carbon dioxide, to adhere to the surface of the reducing agent.

### (Example 7)

An experiment was carried out to examine the particle size of the magnetite material, the oxygen deficiency δ in the reducing agent generation step, and the oxygen defect consumption rate in the carbon generation step.

As magnetite materials, nanoparticle magnetite having an average particle diameter of about 800 nm, fine particle magnetite having an average particle diameter of about 1.1 µm, powder magnetite having an average particle diameter of about 40 µm, and large particle size powder magnetite having an average particle diameter of about 70 µm were prepared. Then, each magnetite material was reduced under the condition of a reaction temperature of 330°C to generate each of reducing agents, and the oxygen deficiency δ of each of these reducing agents was calculated. It is noted that conditions other than the reaction temperature are the same as in Example 6.

Next, using each reducing agent, carbon dioxide was allowed to react at a reaction temperature of 380°C, and the oxygen defect consumption rate was calculated. It is noted that conditions other than the reaction temperature are the same as in Example 6.

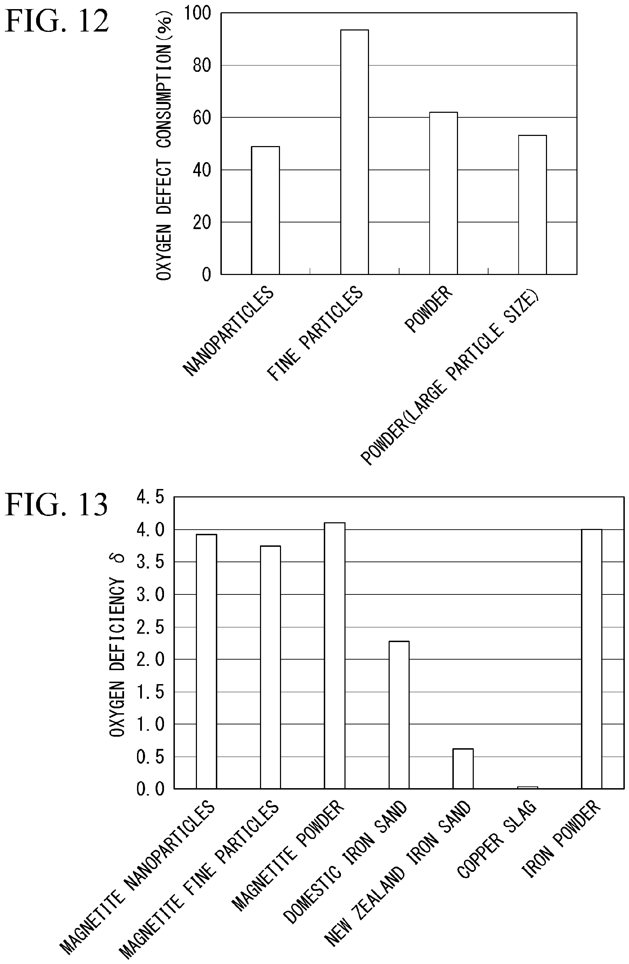

FIG. 11 shows the measurement results of the oxygen deficiency δ of Example 7, and FIG. 12 shows the measurement results of the oxygen defect consumption rate.

According to the results shown in FIG. 11, between the reducing agents obtained by reduction with hydrogen, there is almost no difference depending on the particle size of the raw material magnetite. On the other hand, according to the results shown in FIG. 12, regarding the oxygen defect consumption rate after casuing these reducing agents to react with carbon dioxide, the reducing agent obtained from the fine particle magnetite as a raw material has a particularly excellent oxygen defect consumption rate. As a result, it was found that it is preferable to generate a reducing agent by using fine particle magnetite as a raw material.

### (Example 8)

An experiment was carried out to examine the relationship between the raw material of the reducing agent and the oxygen deficiency δ in the reducing agent generation step and the oxygen defect consumption rate in the carbon generation step.

As magnetite materials, nanoparticle magnetite having an average particle diameter of about 800 nm, fine particle magnetite having an average particle diameter of about 1 µm, powder magnetite having an average particle diameter of about 40 µm, iron sand made in Japan, iron sand made in New Zealand, copper slag, and an iron powder were prepared. Then, under the same conditions as in Example 6, the oxygen deficiency δ of these reducing agents was calculated. It is noted that since the iron powder is in a completely reduced state, δ is set to 4 for convenience.

Next, using each reducing agent, carbon dioxide was allowed to react under the same conditions as in Example 6, and the oxygen defect consumption rate was calculated.

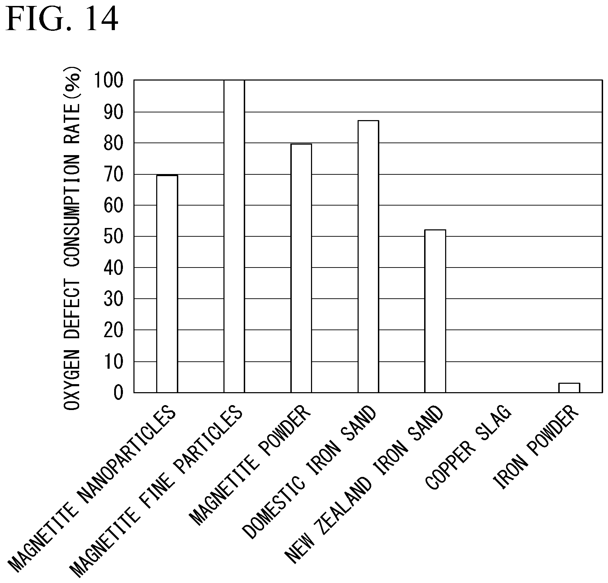

FIG. 13 shows the measurement results of the oxygen deficiency δ of Example 8, and FIG. 14 shows the measurement results of the oxygen defect consumption rate.

According to the results shown in FIG. 13, regarding the reducing agents obtained by the reduction with hydrogen, all reducing agents obtained by the reduction with hydrogen have an excellent value of 3.5 or more in a case where magnetite is used as a raw material. On the other hand, the oxygen deficiency δ of the copper slag is almost zero.

On the other hand, according to the results shown in FIG. 14, regarding the oxygen defect consumption rate after casuing these reducing agents to react with carbon dioxide, the reducing agent obtained from the fine particle magnetite as a raw material has a particularly excellent oxygen defect consumption rate. In addition, it was found that the copper slag and the iron powder have an oxygen defect consumption rate of almost 0% and have no ability to decompose (reduce) carbon dioxide. It is noted that the difference in oxygen defect consumption rate between the domestic iron sand and the iron sand made in NZ is conceived to be caused by the catalytic effect of a small amount of titanium contained in the domestic iron sand.

### (Example 9)

An experiment was carried out to examine the presence or absence of the deterioration of the reducing agent and the amount of generated carbon in a case where the reducing agent generation step and the carbon generation step were repeatedly carried out for each particle size of the magnetite material.

A reducing agent was generated with the same magnetite material and the same reaction conditions as in Example 7, and the mass was measured (the reducing agent generation step).

Next, using each reducing agent, carbon dioxide was decomposed at a reaction temperature of 380°C, and the mass of "the reducing agent + the product (carbon)" after the reaction was measured. It is noted that the carbon separation step was not carried out after the carbon generation step, and the generated carbon was kept as it was. The reducing agent generation step and carbon generation step using each reducing agent were repeated three times, and the mass of the specimen was measured in each step.

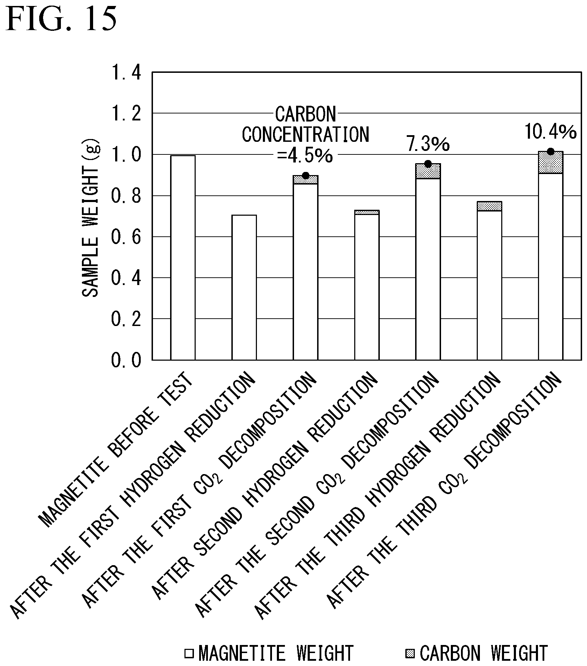

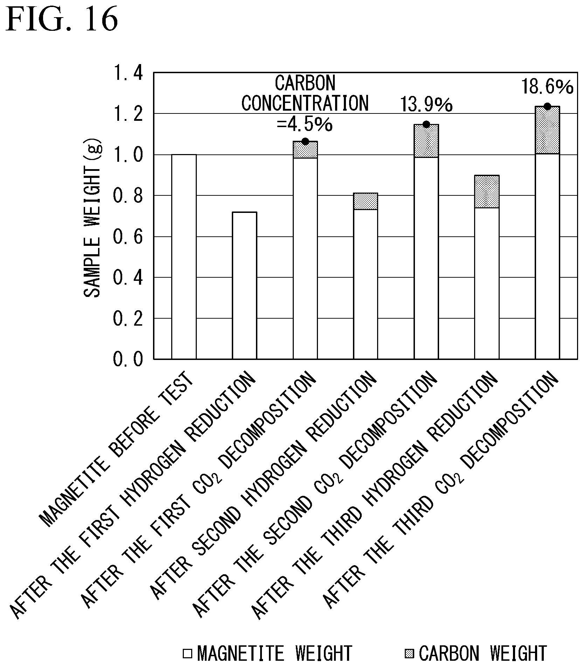

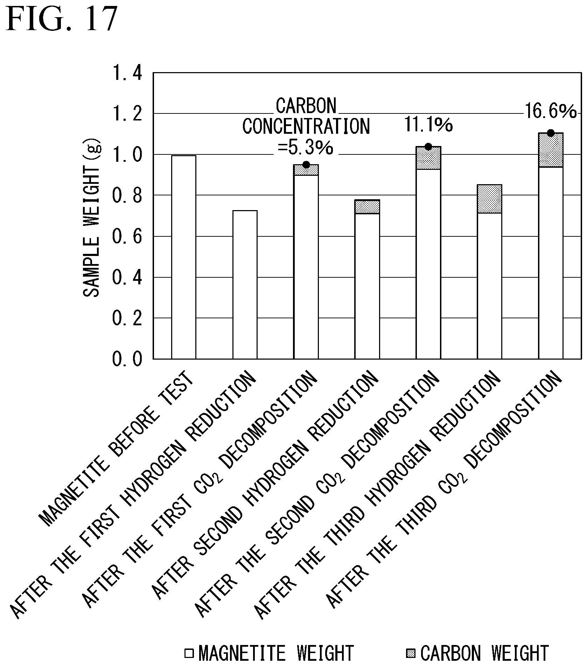

Regarding Example 9, FIG. 15 shows the results of using the nanoparticle magnetite, FIG. 16 shows the results of using the fine particle magnetite, and FIG. 17 shows the results of using the powder magnetite.

According to the results shown in FIG. 15 to FIG. 17, it was confirmed that even in a case where magnetite having any particle size is used as the raw material of the reducing agent, the mass of the carbon measured according to a combustion-infrared absorption method increases almost linearly every time the reducing agent generation step and the carbon generation step are repeated, and the reducing agent is not deteriorated, and thus the reducing agent generation step and the carbon generation step can be carried out a plurality of times by repeatedly using the reducing agent. In addition, it was confirmed that, in particular, in a case where the fine particle magnetite or the powder magnetite is used as a raw material for the reducing agent, the amount of increase in carbon mass is large as compared with a case where the nanoparticle magnetite is used, and considering the fact that the increased fraction is due to carbon accumulation, it is preferable to use the fine particle magnetite or the powder magnetite as a raw material of the reducing agent.

On the other hand, in a case where the nanoparticle magnetite is used as a raw material for the reducing agent, it is conceived that the mass of carbon is reduced by almost half in a case where the reducing agent generation step is carried out after the carbon generation step, and the generated carbon is gasified and removed outside the system. On the other hand, the loss due to the reaction of the generated carbon does not occur in the fine particle magnetite or the powder magnetite. From these facts, it was found that since the nanoparticle magnetite has high reaction activity and a large surface area, the generated and attached carbon easily reacts with oxygen in the reducing agent or hydrogen in the reducing agent generation step, and the carbon loss due to repeated use easily occurs. From the viewpoint of such loss due to the gasification of carbon as well, it was confirmed that it is preferable to use the fine particle magnetite or the powder magnetite as a raw material of the reducing agent.

### (Example 10)

An experiment was carried out to examine the decomposition performance for carbon dioxide in a case where hematite (Fe₂O₃) was used as the magnetite material.

Powdery α-Fe₂O₃ (average particle diameter: 1 µm, purity: 99.9% by mass (manufactured by Kojundo Chemical Laboratory. Co., Ltd.)) was used as a specimen, and as a pretreatment, the temperature was raised to 110°C in an argon gas flow state, followed by being held for 10 minutes, and then air suction was carried out to be a vacuum state, which was further held for 10 minutes.

Using the pretreated specimen obtained in this way, the specimen was reduced to generate a reducing agent by using a fixed bed reactor as a reaction device under the conditions of a reaction temperature of 330°C, a reaction time of 1 hour, a hydrogen flow rate of 1.0 L/min, and a hydrogen concentration of 100% by volume, and the mass was measured.

Table 2 shows the change in the mass of the specimen before the pretreatment, after the pretreatment, and after the hydrogen reduction. It is noted that, for reference, the change in mass in a case where magnetite is used as the raw material is described.

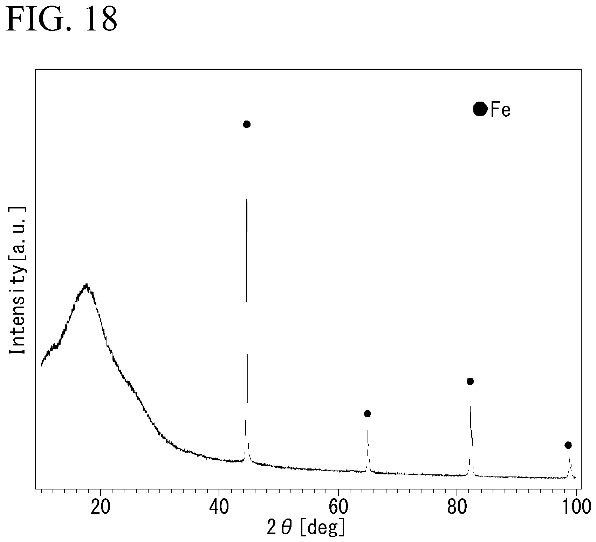

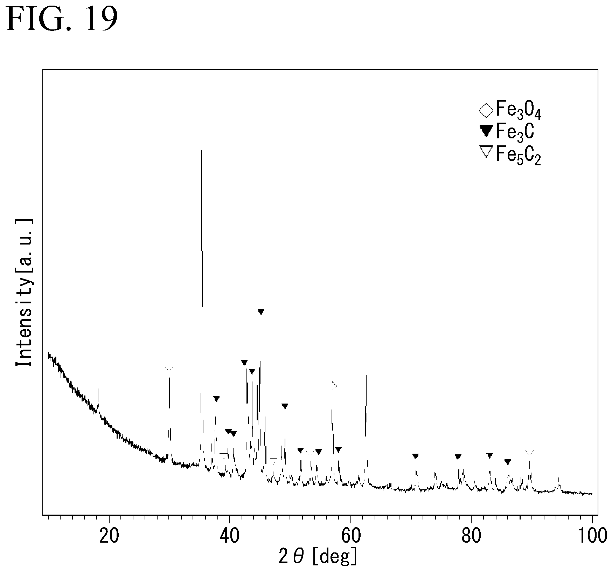

FIG. 18 shows the XRD analysis results of the specimen after the hydrogen reduction, and FIG. 19 shows the XRD analysis results of the specimen after the carbon dioxide decomposition.

**[Table 2]**

| Raw material of reducing agent | Before pretreatment (g) | After pretreatment (g) | After reduction (g) |
|---|---|---|---|
| Hematite | 1.000 | 0.996 | 0.697 |
| Magnetite | 1.001 | 0.995 | 0.705 |

According to the results shown in Table 2, it is conceived that from the weight change due to hydrogen reduction, hematite is completely reduced to the state of the oxygen-completely deficient iron.

In addition, according to the XRD analysis results, the product is mostly Fe, and thus from these XRD analysis results as well, it is conceived that hematite is completely reduced to the state of the oxygen-completely deficient iron.

Next, using the obtained hematite-derived reducing agent, carbon dioxide was decomposed at a reaction temperature of 370°C until the pressure change disappeared, the change in the amount of substance in the gas phase part was calculated, by using the pressure and temperature in the reactor, according to the state equation of the ideal gas, and the mass of the product (carbon) was measured according to the combustion-infrared absorption method (the carbon generation step).

Table 3 shows the change in the amount of the gas phase part substance after the decomposition of carbon dioxide, the mass of the product (carbon), and the change in the amount of the gas phase part substance per mole of iron in the reducing agent. It is noted that, for reference, the result in a case where magnetite is used as the raw material is also described.

**[Table 3]**

| | Change in amount of gas phase part substance [mol] | Amount of generated carbon [g] | Substance amount of Fe [mol] | Change in amount of gas phase part substance per 1 mol of Fe |
|---|---|---|---|---|
| Hematite | -4.90E-03 | 0.059 | 1.25E-02 | -0.39 |
| Magnetite | -5.41E-03 | 0.065 | 1.29E-02 | -0.42 |

According to the results shown in Table 3, it was confirmed that carbon dioxide can be decomposed by using the reducing agent obtained by hydrogen reduction of hematite. It is noted that from the fact that the color tone of the hematite-derived reducing agent after decomposing carbon dioxide is black and the XRD analysis results, it is conceived that even the hematite-derived reducing agent is only oxidized to magnetite (does not return to hematite) after decomposing carbon dioxide.

### (Example 11)

Using, as a raw material for generating a reducing agent, a powder containing iron hydroxide, which had been taken out from a used heat pad, an experiment was carried out to examine the decomposition performance for carbon dioxide.

"Pokapoka Family Regular 10 pieces (PKN-10R)" manufactured by IRIS OHYAMA Inc. was used as the used heat pad, and as a pretreatment, the temperature was raised to 110°C in an argon gas flow state, followed by being held for 10 minutes, and then air suction was carried out to be a vacuum state, which was further held for 10 minutes.

Using a fixed bed reactor as a reaction device, the used heat pad (powdery) after the pretreatment, which was obtained in this way, was reduced to generate a reducing agent under the conditions of a reaction temperature of 330°C, a reaction time of 1 hour, a hydrogen flow rate of 1.0 L/min, and a hydrogen concentration of 100% by volume, and the mass was measured.

Table 4 shows the changes in the mass of the specimen before the pretreatment and after the pretreatment, and before the hydrogen reduction and after the hydrogen reduction. It is noted that, for reference, the change in mass in a case where hematite is used as the raw material is described.

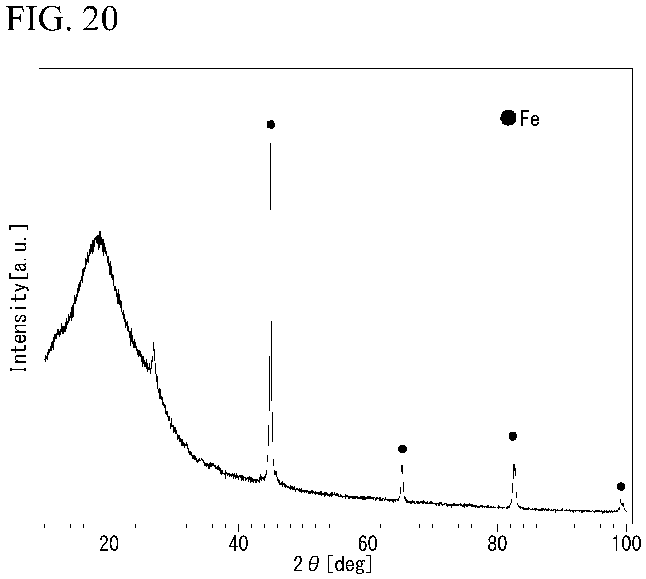

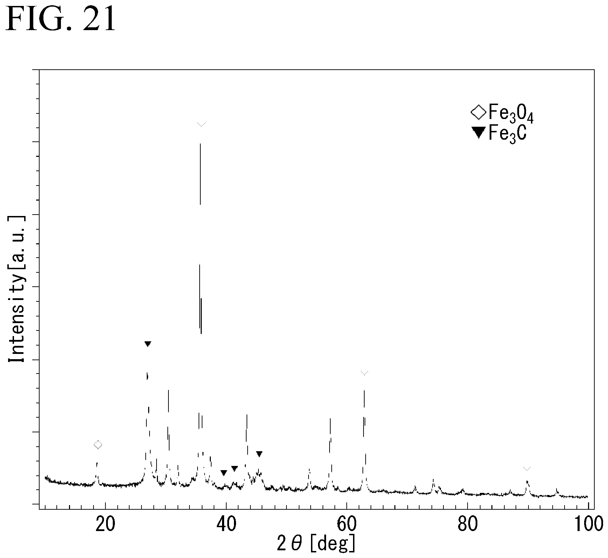

FIG. 20 shows the XRD analysis results of the specimen after the hydrogen reduction, and FIG. 21 shows the XRD analysis results of the specimen after the carbon dioxide decomposition.

**[Table 4]**

| Raw material of reducing agent | Pretreatment | | | Hydrogen reduction | | | Carbon dioxide decomposition | | |
|---|---|---|---|---|---|---|---|---|---|
| | Before treatment | After treatment | Change in mass | Before treatment | After treatment | Change in mass | Before decomposition | After decomposition | Change in mass |
| Used heat pad | 1.000 | 0.915 | -0.085 | 0.911 | 0.691 | -0.220 | 0.691 | 0.855 | 0.164 |
| Hematite | 1.001 | 0.997 | -0.004 | 0.997 | 0.699 | -0.298 | 0.699 | 0.844 | 0.145 |

From the fact that similar to the reducing agent derived from magnetite or hematite, the color tone of the reducing agent derived from the used heat pad after the hydrogen reduction is black, it is conceived that the used heat pad is reduced to the state of the oxygen-completely deficient iron.

In addition, according to the XRD analysis results, the product is mostly Fe, and thus from these XRD analysis results as well, it is conceived that the iron hydroxide in the used heat pad is reduced to the state of the oxygen-completely deficient iron.

Next, using the obtained reducing agent derived from the used heat pad, carbon dioxide was decomposed at a reaction temperature of 370°C until the pressure change disappeared, and the mass was measured. Table 4 above shows the change in the mass of the specimen before the carbon dioxide decomposition and after the carbon dioxide decomposition.

According to the results shown in Table 4, it was confirmed that carbon dioxide can be decomposed by using the reducing agent obtained by hydrogen reduction of the used heat pad. It is noted that from the fact that the color tone of the reducing agent after decomposing carbon dioxide is black and the XRD analysis results, it is conceived that even the reducing agent derived from the used heat pad is only oxidized to magnetite (does not return to iron hydroxide) after decomposing carbon dioxide.

### [Industrial Applicability]

In a case of applying the present invention to various plants that emit a large amount of carbon dioxide, such as steel plants, thermal power plants, cement manufacturing plants, and garbage incineration facilities, it is possible to achieve the reduction of the emission of carbon dioxide and produce a high value-added carbon material such as nano-sized particulate carbon. Therefore, the industrial usability is provided.

In addition, in a case where the present invention is applied to a steel plant that emits a large amount of carbon dioxide or by-product hydrogen, it is possible to achieve the effective use of hydrogen and the reduction of the emission of carbon dioxide and produce a high value-added carbon material such as nano-sized particulate carbon. Therefore, the industrial usability is provided.

### [Reference Signs List]

10: Carbon material manufacturing plant
11: Carbon dioxide decomposition furnace
12: Reduction furnace
20: Steel plant
21: Blast furnace
22: Converter
23: Coke plant
24 Iron ore storage facility (iron ore yard)
25: Sintering plant

## Claims

1. A method for producing a carbon material, comprising:
a carbon generation step of causing carbon dioxide to react with a reducing agent to generate carbon,
wherein, as the reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.

2. The method for producing a carbon material according to Claim 1, further comprising:
a reducing agent generation step of causing a magnetite to be reduced and hydrogen to react with each other to carry out a deoxygenation reaction of the magnetite to generate the oxygen-deficient iron oxide or the oxygen-completely deficient iron.

3. The method for producing a carbon material according to Claim 2,
wherein in the reducing agent generation step, a reaction temperature is set in a range of 300°C or higher and 450°C or lower.

4. The method for producing a carbon material according to Claim 2 or 3,
wherein a concentration of the hydrogen that is used in the reducing agent generation step is in a range of 5% by volume or more and 100% by volume or less.

5. The method for producing a carbon material according to any one of Claims 1 to 4, further comprising:
a carbon capture step of dissolving the reducing agent which has been oxidized and separating the carbon, after the carbon generation step.

6. The method for producing a carbon material according to any one of Claims 1 to 5,
wherein the carbon is nano-sized carbon having a particle diameter of 1 µm or less.

7. The method for producing a carbon material according to any one of Claims 1 to 6,
wherein in the carbon generation step, a reaction temperature is set in a range of 300°C or higher and 450°C or lower.

8. The method for producing a carbon material according to any one of Claims 1 to 7,
wherein in the carbon generation step, a reaction pressure is set in a range of 0.01 MPa or more and 5 MPa or less.

9. The method for producing a carbon material according to Claim 2,
wherein in the carbon generation step, the carbon and magnetite to be generated are generated,
in the reducing agent generation step, the magnetite to be generated is used as the magnetite to be reduced, and
an exhaust gas generated in a steel plant is used in at least a part of at least any one of the carbon dioxide or the hydrogen.

10. The method for producing a carbon material according to Claim 9,
wherein in the reducing agent generation step, a reaction temperature is in a range of 300°C or higher and 450°C or lower, and heating is carried out using waste heat generated in the steel plant.

11. The method for producing a carbon material according to Claim 9 or 10,
wherein a concentration of the hydrogen that is used in the reducing agent generation step is in a range of 5% by volume or more and 100% by volume or less.

12. The method for producing a carbon material according to any one of Claims 9 to 11,
wherein in the carbon generation step, a reaction temperature is in a range of 300°C or higher and 450°C or lower, and heating is carried out using waste heat generated in the steel plant.

13. The method for producing a carbon material according to any one of Claims 9 to 12,
wherein in the carbon generation step, a reaction pressure is in a range of 0.01 MPa or more and 5 MPa or less.

14. The method for producing a carbon material according to any one of Claims 9 to 13,
wherein the carbon is nano-sized carbon having a particle diameter of 1 µm or less.

15. The method for producing a carbon material according to any one of Claims 9 to 14,
wherein iron sand contained in iron ore that is used in the steel plant is used in at least a part of the magnetite.

16. The method for producing a carbon material according to any one of Claims 9 to 15, further comprising:
a step of supplying at least a part of the reducing agent oxidized through the carbon generation step to the steel plant as a raw material for steelmaking, which is consumed in the steel plant.

17. The method for producing a carbon material according to any one of Claims 9 to 16, further comprising:
a step of supplying at least a part of the carbon generated in the carbon generation step to the steel plant as a substitute for coke, which is consumed in the steel plant.

18. The method for producing a carbon material according to any one of Claims 9 to 17, further comprising:
a carbon capture step a carbon capture step a step of dissolving the reducing agent which has been oxidized and separating the carbon, after the carbon generation step.

19. The method for producing a carbon material according to any one of Claims 1 to 18,
wherein the magnetite to be reduced has a specific surface area in a range of 0.1 m²/g or more and 10 m²/g or less according to a BET method.

20. The method for producing a carbon material according to any one of Claims 1 to 19,
wherein the magnetite to be reduced has an average particle diameter in a range of 1 µm or more and 1,000 µm or less.

21. The method for producing a carbon material according to any one of Claims 1 to 20,
wherein the magnetite to be reduced has a bulk density in a range of 0.3 g/cm³ or more and 3 g/cm³ or less.

22. A carbon material produced by the method for producing a carbon material according to any one of Claims 1 to 21.

23. A method for decomposing carbon dioxide, comprising:
a carbon dioxide decomposition step of reacting carbon dioxide and a reducing agent to decompose the carbon dioxide,
wherein, as the reducing agent, an oxygen-deficient iron oxide represented by Fe₃O_{4-δ} (where δ is 1 or more and less than 4), which is obtained by reducing magnetite while maintaining a crystal structure, or an oxygen-completely deficient iron (δ = 4) which is obtained by completely reducing magnetite is used.

24. The method for decomposing carbon dioxide, according to Claim 23, wherein an exhaust gas generated in a steel plant is used as the carbon dioxide.

25. A reducing agent that includes at least one of an oxygen-deficient iron oxide represented by Fe₃O_{4-δ} (where δ is 1 or more and less than 4), which is obtained by reducing magnetite while maintaining a crystal structure, and an oxygen-completely deficient iron (δ = 4) which is obtained by completely reducing magnetite.

26. The reducing agent according to Claim 25,
wherein the reducing agent is obtained by reacting the magnetite and hydrogen to carry out a deoxygenation reaction of the magnetite.

27. The reducing agent according to Claim 26,
wherein a reaction temperature of the deoxygenation reaction is set in a range of 300°C or higher and 450°C or lower.

28. The reducing agent according to any one of Claims 25 to 27,
wherein the magnetite has a specific surface area in a range of 0.1 m²/g or more and 10 m²/g or less according to a BET method.

29. The reducing agent according to any one of Claims 25 to 28,
wherein the magnetite has an average particle diameter in a range of 1 µm or more and 1,000 µm or less.

30. The reducing agent according to any one of Claims 25 to 29,
wherein the magnetite has a bulk density in a range of 0.3 g/cm³ or more and 3 g/cm³ or less.
